# EUROPÄISCHE PATENTSCHRIFT

(11) **EP 4 336 286 B1**
(45) Veröffentlichungstag und Bekanntmachung des Hinweises auf die Patenterteilung: **25.11.2026**
(21) Anmeldenummer: 22195239.3
(22) Anmeldetag: 12.09.2022
(51) Int. Cl.: G05B 19/4097, G05B 19/401

(54) **VERFAHREN ZUR BEARBEITUNG EINES SCHNEIDWERKZEUGS UND BEARBEITUNGSVORRICHTUNG ZUR DURCHFÜHRUNG DES VERFAHRENS**
METHOD FOR MACHINING A CUTTING TOOL AND MACHINING DEVICE FOR CARRYING OUT SAID METHOD
PROCÉDÉ D'USINAGE D'UN OUTIL DE COUPE ET DISPOSITIF D'USINAGE POUR LA MISE EN OEUVRE DU PROCÉDÉ

(43) Veröffentlichungstag der Anmeldung: 13.03.2024
(73) Patentinhaber: Rollomatic S.A., 2525 Le Landeron (CH)
(72) Erfinder: KRUMM, Christian, 2607 Cortébert (CH); FREIDY, Mouhamadali, 1020 Renens (CH)
(74) Vertreter: Geitz Patentanwälte PartG mbB

(56) Entgegenhaltungen:
- EP-A1- 3 457 237
- WO-A2-2011/050053
- DE-A1- 102015 102 359

## Beschreibung

Die Erfindung geht aus von einem Verfahren zur Bearbeitung eines Schneidwerkzeugs, welches einen Schneidwerkzeugkörper und mindestens einen an dem Schneidwerkzeugkörper befestigten Schneideinsatz mit mindestens einer Schneidkante aufweist.

Schneidwerkzeuge umfassen Zerspanungswerkzeuge für spanabhebende Fertigungsverfahren und Werkzeuge für das Zerteilen. Sie weisen in der Regel einen Schaft und einen Schneidteil auf. Dabei dient der Schaft dem Halten des Schneidwerkzeugs, beispielsweise in einer Maschinenschnittstelle bei Maschinenbearbeitungswerkzeugen. An dem Schaft ist der Schneidteil angeordnet. Dieser weist mindestens eine Schneidkante auf, mit der das Schneidwerkzeug in Wechselwirkung mit einem zu bearbeitenden Werkstück tritt und dabei von dem Werkstück Material abträgt. Zu derartigen Schneidwerkzeugen zählen beispielweise Fräser, Bohrer, Reibahlen, Meißel, Schaber, Hobel und Sägen. Dabei kann das Schneidwerkzeug ein Massiv-Werkzeug sein, welches durchgängig aus einem einzigen Material besteht. Alternativ dazu kann das Schneidteil auch einen die Schneidkante umfassenden Einsatz aufweisen, wobei der Einsatz aus einem anderen Material besteht als der Schaft. Schneidwerkzeuge unterliegen an ihrem Einsatzort aufgrund der auf sie wirkenden Kräfte und der entstehenden Temperaturen erheblichen mechanischen und thermischen Belastungen. Hierzu zählen mechanische Reibung, Oxidation und Abrieb sowie vor allem bei hohen Bearbeitungsgeschwindigkeiten Diffusion und Verzunderung. Dies führt zu einem Verschleiß des Schneidwerkzeugs im Bereich der Schneidkante.

Um die Verschleißfestigkeit von Schneidwerkzeugen zu verbessern und die Standzeit zu erhöhen, werden Schneidwerkzeuge im Bereich der Schneidkante mit einem Material ausgestattet, das härter ist als der übrige Schneidwerkzeugkörper. Hierzu kann bei einem Schneidwerkzeug mit Schneideinsatz entweder der Schneideinsatz mit einer Hartbeschichtung ausgestattet sein oder der komplette Schneideinsatz kann aus einem Hartmaterial bestehen. Zu derartigen Hartmaterialien oder ultraharten Materialien zählen beispielsweise Diamant, wie polykristalliner Diamant PCD, einkristalliner Diamant, kristalliner Diamant oder Diamant aus der Gasphasenabscheidung CVD, amorpher Kohlenstoff, der in der englischen Sprache als Diamond like Carbon DLC bezeichnet wird, kubisches Bornitrid CBN, Titan oder Keramik. Ist der Schneideinsatz mit einer Beschichtung aus Hartmaterial ausgestattet, so kann diese beispielsweise mittels chemischer Gasphasenabscheidung, englisch Chemical Vapour Deposition, CVD auf den Schneideinsatz aufgebracht sein.

Die DE 10 2015 102359 A1 offenbart ein Verfahren und eine Vorrichtung zum Entfernen von Material von einem Schneideinsatz unter von Verwendung von elektromagnetischer Strahlung insbesondere unter Verwendung eines Lasers. Dabei wird ein Laserstrahl auf eine Oberfläche des Schneideinsatzes gerichtet. Die Abmessung des Laserstrahls wird durch eine Maske in Form eines gleichschenkligen Trapezes verkleinert. Durch Bewegen des Laserstrahls in Bezug auf den Schneideinsatz wird von dem durch die Maske begrenzten Laserstrahl an dem Schneideinsatz eine T-Stegfläche benachbart zur Schneidkante erzeugt.

Die WO 2011/050053 A2 offenbart ein Verfahren zur Laserbearbeitung eines rotierenden Schneidwerkzeugs, welches einen Körper mit mindestens einer Nut und einer Schneide aufweist. Dabei wird mit Hilfe eines gerichteten Laserstrahls Material an dem Schneidwerkzeug abgetragen und dadurch eine Schneide mit den zur Schneide benachbarten Oberflächen erzeugt. In der Druckschrift ist kein Verfahren zur Bearbeitung von Schneidwerkzeugen mit Schneideinsätzen offenbart.

Die EP 3 457 237 A1 offenbart ein Verfahren zur mehrstufigen Bearbeitung eines Schneidwerkzeugs. Diese Bearbeitung umfasst mindestens einen Grobbearbeitungsschritt, der auch als Makroumformungsschritt bezeichnet wird, und einen Feinbearbeitungsschritt, der auch als Mikroumformungsschritt bezeichnet wird. Bei dem Makroumformungsschritt wird das Werkstück bzw. der Rohling durch allseitiges Abtragen von Material umgeformt. Bei dem Mikroumformungsschritt handelt es sich um eine Laserbearbeitung, vorzugsweise Laserablation, Schleifen und/oder elektrische Entladungsbearbeitung des Werkstücks. Durch diesen Feinbearbeitungsschritt wird die zuvor bearbeitete Oberfläche geglättet und es können bestimmte Oberflächengeometrien, wie zum Beispiel Vertiefungen und Rundungen an einer Schneide geformt werden. Bei jeder Bearbeitung wird das Werkstück zunächst vermessen, dann spanend bearbeitet und anschließend erneut vermessen. Die einzelnen Bearbeitungsschritte werden in verschiedenen Bearbeitungsmaschinen durchgeführt. Durch die nacheinander durchgeführten Bearbeitungsvorgänge einer Makroumformung und einer Mikroumformung soll zu dem Werkstück schrittweise die gewünschte Kontur erzeugt werden.

Schneideinsätze werden zur Befestigung an dem Werkzeugkörper in der Regel direkt auf diesen gelötet. Diese Verbindung zeichnet sich zwar durch eine hohe Festigkeit aus, jedoch sind Lötverfahren nicht präzise genug, um eine exakte Positionierung der Schneideinsätze auf dem Schneidwerkzeugkörper zu gewährleisten. Hinzu kommt, dass die Schneideinsätze gewisse Ungenauigkeiten hinsichtlich ihrer Form, ihrer Länge, Breite, Tiefe oder eine eventuelle Krümmung ihrer Oberflächen aufweisen können. Diese Ungenauigkeiten der Schneideinsätze und eine ungenaue Positionierung der Schneideinsätze auf dem Schneidwerkzeugkörper führen dazu, dass das zugehörige Schneidwerkzeug nicht die vorgegebenen Toleranzen erfüllt und eine schlechte Qualität aufweist. Daher muss ein Schneidwerkzeug nach dem Auflöten der Schneideinsätze nachbearbeitet werden. Bei dieser Nachbearbeitung wird gezielt an den Schneideinsätzen Material abgetragen, so dass insbesondere die Schneidkante und die Oberflächen, welche durch die Schneidkante begrenzt werden, die Vorgaben erfüllen. Dies erfolgt anhand einer Bearbeitungsvorrichtung, welche eine das Schneidwerkzeug aufnehmende und fixierende Fixiereinrichtung, eine Materialabtragseinrichtung, welche an der Oberfläche des Schneidwerkzeugs Material abträgt, und eine Bewegungseinrichtungseinrichtung aufweist. Die Bewegungseinrichtung bewegt das in der Fixiereinrichtung aufgenommene Schneidwerkzeug und die Materialabtragseinrichtung zum gezielten Materialabtrag relativ zueinander. Die Materialabtragseinrichtung kann beispielsweise mit einer Schleifscheibe, einem Laser zur Erzeugung eines Laserstrahls oder mit einer Einrichtung zum Electrical Discharge Machining EDM ausgestattet sein.

Bevor die Nachbearbeitung der auf den Werkzeugkörper gelöteten Schneideinsätze mit der Bearbeitungsvorrichtung erfolgen kann, muss die genaue Position jedes Schneideinsatzes in drei Dimensionen in Bezug auf die bekannten Referenzen des Schneidwerkzeugs bestimmt werden. Darüber hinaus muss bestimmt werden, ob die Oberflächen eben oder gekrümmt sind. Wenn das Schneidwerkzeug als Rotationswerkzeug ausgebildet ist, das bei seinem Einsatz um eine geometrische Schneidwerkzeug-Rotationsachse gedreht wird, kann die geometrische Schneidwerkzeug-Rotationsachse beispielsweise eine Bezugsgröße sein. Eine weitere Bezugsgröße kann eine Oberseite des Schneidwerkzeugs oder eine Unterseite des Schneidwerkzeugs sein.

Aus der erfassten Position, Ausrichtung und Form der Schneideinsätze wird die Bahn bestimmt, entlang der die Materialabtragseinrichtung relativ zu dem Schneidwerkzeug bewegt werden muss, um den für die Nachbearbeitung notwendigen Materialabtrag an den Schneideinsätzen zu erzielen.

Es ist bekannt, die Position der aufgelöteten Schneideinsätze an einem Schneidwerkzeug mit einem mechanischen Messtaster zu erfassen. Dieser Messtaster ist hierzu an der Bearbeitungsvorrichtung angeordnet. Anhand der Art und der Form des Schneidwerkzeugs und der Art und Anzahl der Schneideinsätze an dem Schneidwerkzeug muss der Messtaster so relativ zu dem Schneidwerkzeug bewegt werden, dass er an jedem Schneideinsatz an mindestens drei Messpunkten die Position der Oberfläche relativ zu einer Bezugsgröße, wie beispielsweise die geometrische Schneidwerkzeug-Rotationsachse, erfasst. Die Steuerung des Messtasters erfolgt in der Regel anhand eines Computers, beispielsweise CNC. Die Software muss durch den zuständigen Bearbeiter anhand der Art, der Anzahl und der ungefähren Position der Schneideinsätze erstellt und vorgegeben werden. Der Bearbeiter kann sich hierbei zwar auf technische Vorgaben und Zeichnungen des Schneidwerkzeugs stützen, jedoch enthalten diese Vorgaben nicht die sich aus dem Löten der Schneideinsätze ergebenden Ungenauigkeiten. Die Details müssen daher von dem Bearbeiter in die Steuerung eingegeben werden, damit der Messtaster an die Messpunkte der Schneideinsätze herangeführt wird. Dies ist insbesondere bei Schneidwerkzeugen mit einer großen Anzahl an Schneideinsätzen mit einem erheblichen Aufwand verbunden. Außerdem besteht die Gefahr, dass bei der Eingabe der Details in die Steuerung Fehler gemacht werden.

Der Erfindung liegt die Aufgabe zugrunde, ein Verfahren zur Verfügung zu stellen, mit dem die Nachbearbeitung von Schneideinsätzen nach dem Auflöten auf ein Schneidwerkzeug erleichtert wird, wobei die Nachbearbeitung automatisiert erfolgt.

Diese Aufgabe wird durch ein Verfahren mit den Merkmalen des Anspruchs 1 und durch eine Bearbeitungsvorrichtung mit den Merkmalen des Anspruchs 21 gelöst. Das Verfahren zeichnet sich dadurch aus, dass eine 3-dimensionale Oberfläche des in der Fixiereinrichtung der Bearbeitungsvorrichtung angeordneten Schneidwerkzeugs zumindest in denjenigen Abschnitten des Schneidwerkzeugs vorgegeben wird, in denen der Schneideinsatz am Schneidwerkzeugkörper angeordnet ist, wobei diese Oberfläche als 3-dimensionale Schneidwerkzeug-Oberfläche definiert wird. Dann werden aus der 3-dimensionalen Schneidwerkzeug-Oberfläche diejenigen Teilbereiche bestimmt, die eine Oberfläche des Schneideinsatzes bilden und benachbart zu einer Schneidkante angeordnet sind. Diese Oberflächen werden als Schneidkantenbegrenzungsoberflächen definiert. Der Schneideinsatz weist mindestens zwei Schneidkantenbegrenzungsoberflächen auf. Hierbei kann es sich beispielweise um eine Freifläche und eine Spanfläche der Schneidkante des Schneideinsatzes handeln. Schließlich werden die Bewegungseinrichtung und/ oder die Materialabtragseinrichtung anhand der Schneidkantenbegrenzungsoberflächen gesteuert und es erfolgt ein gezielter Materialabtrag an den Schneideinsätzen.

Grundsätzlich weist der Schneideinsatz nicht nur Oberflächen auf, die Teil der Oberfläche des Schneidwerkzeugs sind und benachbart zur Schneidkante des Schneideinsatzes angeordnet sind. Beispielsweise gehören zum Schneideinsatz auch diejenigen Oberflächen, an denen der Schneideinsatz auf den Schneidwerkzeugkörper aufgelötet ist. Es wird davon ausgegangen, dass diejenigen Oberflächen des Schneideinsatzes, die Teil der Oberfläche des Schneidwerkzeugs sind und die benachbart zur Schneidkante des Schneideinsatzes sind, für die Qualität des Schneidwerkzeugs besonders wichtig sind, weshalb eine Überprüfung und Nachbearbeitung in diesem Bereich von besonderer Bedeutung ist. Sofern notwendig kann selbstverständlich auch eine Nachbearbeitung an Oberflächen des Schneideinsatzes erfolgen, die nicht benachbart zur Schneidkante sind.

Die 3-dimensionale Schneidwerkzeug-Oberfläche wird so vorgegeben, dass keine Daten von Hand in die Bearbeitungsvorrichtung eingegeben werden müssen. Die 3-dimensionale Schneidwerkzeug-Oberfläche kann beispielsweise mittels bereits bekannter CAD-Daten des Schneidwerkzeugs generiert und in die Bearbeitungsvorrichtung eingegeben werden. In diesem Fall entspricht die 3-dimensionale Schneidwerkzeug-Oberfläche der aus der CAD-Konstruktion des Schneidwerkzeugs generierten theoretischen geometrischen Oberfläche des Schneidwerkzeugs oder ist Teil derselben. Alternativ dazu kann die 3-dimensionale Oberfläche mittels eines Oberflächen-Scanners anhand des in die Fixiereinrichtung eingespannten Schneidwerkzeugs erzeugt und in die Vorrichtung eingegeben werden. In diesem Fall entspricht die 3-dimensionale Schneidwerkzeug-Oberfläche der tatsächlichen Oberfläche des Schneidwerkzeugs nach dem Auflöten der Schneideinsätze. In beiden Fällen müssen die Oberflächen-Daten nicht von Hand in das System eingetragen werden. Das Verfahren ist daher für den Benutzer wesentlich weniger aufwändig und weniger fehleranfällig.

Durch eine Auswertung der 3-dimensionalen Schneidwerkzeug-Oberfläche werden diejenigen Teilbereiche bestimmt, die eine Oberfläche des Schneideinsatzes bilden und benachbart zu einer Schneidkante angeordnet sind. Diese Teilbereiche zeichnen sich dadurch aus, dass sie eine bestimmte Ausrichtung relativ zu einer Bezugsgröße des Schneidwerkzeugs, beispielsweise zu der geometrischen Schneidwerkzeug-Rotationsachse, zu der Unterseite oder der Oberseite des Schneidwerkzeugs aufweisen. Diese Eigenschaft der Oberflächen der Schneideinsätze wird bei deren Bestimmung ausgenutzt. Anhand des erfindungsgemäßen Verfahrens werden unabhängig davon, wie und in welcher Art und Weise die 3-dimensionale Schneidwerkzeug-Oberfläche vorgegebenen wird, die Schneidkantenbegrenzungsoberflächen bestimmt. Hierzu müssen keine Daten oder Informationen durch den Benutzer eingegeben werden.

Dank der Auswertung der 3-dimensionalen Schneidwerkzeug-Oberfläche und der Bestimmung der Schneidkantenbegrenzungsoberflächen hieraus ergeben sich die Position, die Ausrichtung, eine eventuelle Krümmung der Oberfläche und die Länge, Breite oder Tiefe der Schneideinsätze. Sofern notwendig und gewünscht können auf den Schneidkantenbegrenzungsoberflächen Messpunkte definiert werden, an denen die Oberfläche der Schneideinsätze abgetastet wird. Die aus der 3-dimensionalen Schneidwerkzeug-Oberfläche bestimmten Schneidkantenbegrenzungsoberflächen werden an die bei der Abtastung gewonnenen Daten angepasst. Aus den Schneidkantenbegrenzungsoberflächen, gegebenenfalls mit der Anpassung durch Daten aus der Abtastung, wird bestimmt, wie die Materialabtragseinrichtung relativ zu dem Schneidwerkzeug bewegt werden muss, um gezielt Material an den Schneideinsätzen abzutragen, so dass eine Nachbearbeitung der aufgelöteten Schneideinsätze erfolgt und das Schneidwerkzeug anschließend die Vorgaben hinsichtlich der Position, der Ausrichtung und dem Verlauf der Schneidkante und der Oberflächen, welche durch die Schneidkante begrenzt werden, innerhalb bestimmter Toleranzen erfüllt.

Dem Schneidwerkzeug können folgende Oberflächen zugeordnet werden:
1. Eine theoretische geometrische 3-dimensionale Oberfläche des Schneidwerkzeugs, die sich aus seiner Konstruktion ergibt; sofern das Schneidwerkzeug mittels CAD konstruiert wird, kann die theoretische geometrische 3-dimensionale Oberfläche des Schneidwerkzeugs aus den CAD-Daten abgeleitet werden. Diese Oberfläche enthält gegebenenfalls nicht die Ungenauigkeiten, die sich aus der Herstellung des Schneideinsatzes und dem Auflöten des Schneideinsatzes ergeben.
2. Tatsächliche 3-dimensionale Oberfläche des Schneidwerkzeugs nach dem Auflöten des Schneideinsatzes; Diese Oberfläche enthält die Ungenauigkeiten, die sich aus der Herstellung des Schneideinsatzes und dem Auflöten des Schneideinsatzes ergeben; Diese Oberfläche kann beispielsweise mittels eines Oberflächen-Scanners ermittelt werden, der die gesamte Oberfläche des Schneidwerkzeugs erfasst; Alternativ kann diese Oberfläche mittels der aus Abschnitt 1 ergebenden Daten und einer anschließenden Abtastung der Oberflächen des Schneideinsatzes an einzelnen bestimmten Messpunkten an der Oberfläche des Schneideinsatzes ermittelt werden, wobei die sich aus Abschnitt 1 ergebende Oberfläche an die sich aus der Abtastung an den Messpunkten ergebenden Abtastdaten angepasst wird; Die Anzahl der Messpunkte ist in diesem Fall wesentlich kleiner als die Anzahl der Punkte, an denen die Oberfläche des Schneidwerkzeugs mittels eines Oberflächen-Scanners erfasst wird; Es besteht darüber hinaus die Möglichkeit, die mit dem Oberflächen-Scanner ermittelte Oberfläche an die sich aus der Abtastung an den Messpunkten ergebenden Abtastdaten anzupassen; Hierdurch kann die Genauigkeit gegebenenfalls erhöht werden.
3. Aus der 3-dimensionalen Oberfläche des Schneidwerkzeugs bestimmte Schneidkantenbegrenzungsoberflächen: die Schneidkantenbegrenzungsoberflächen können aus der theoretischen geometrischen 3-dimensionale Oberfläche des Schneidwerkzeugs gemäß Abschnitt 1 oben oder aus der tatsächlichen 3-dimensionalen Oberfläche des Schneidwerkzeugs nach dem Auflöten des Schneideinsatzes gemäß Abschnitt 2 oben bestimmt werden. Wenn die Schneidkantenbegrenzungsoberflächen aus der theoretischen geometrischen 3-dimensionale Oberfläche des Schneidwerkzeugs gemäß Abschnitt 1 oben bestimmt werden, sollten in den daraus abgeleiteten Schneidkantenbegrenzungsoberflächen mehrere Messpunkte bestimmt und die Oberfläche des in der Fixiereinrichtung angeordneten Schneidwerkzeugs an diesen Messpunkten mittels eines Messtasters erfasst werden. Dies dient der Anpassung der theoretischen Schneidkantenbegrenzungsoberflächen an die Realität. Die Schneidkantenbegrenzungsoberflächen werden derart angepasst, dass die mit dem Messtaster erfassten Abtastdaten auf den Schneidkantenbegrenzungsoberflächen liegen.
4. Nachbearbeitete Schneidkantenbegrenzungsoberflächen: nach Abschluss des Materialabtrags mit dem erfindungsgemäßen Verfahren sollten die tatsächlichen realen Schneidkantenbegrenzungsoberflächen des Schneidwerkzeugs innerhalb vorgegebener Toleranzen den Vorgaben entsprechen, die für die Schneidkante und die Schneidkantenbegrenzungsoberflächen gelten.

Bei dem erfindungsgemäßen Verfahren wird die 3-dimensionale Schneidwerkzeug-Oberfläche gemäß Abschnitt 1 oben oder gemäß Abschnitt 2 oben vorgegeben und es werden daraus die Schneidkantenbegrenzungsoberflächen gemäß Abschnitt 3 oben bestimmt. Es wird davon ausgegangen, dass diese Schneidkantenbegrenzungsoberflächen den zugehörigen realen Oberflächen an dem in die Fixiereinrichtung eingespannten und zu bearbeitenden Schneidwerkzeug entsprechen. Ausgehend von diesen Schneidkantenbegrenzungsoberflächen werden die Bewegungseinrichtung und die Materialabtragseinrichtung gesteuert, so dass gezielt Material an dem Schneideinsatz abgetragen wird. Ziel ist es, dass die derart nachbearbeiteten Schneidkantenbegrenzungsoberflächen nach Abschluss der Bearbeitung die in Abschnitt 4 oben angegebenen Kriterien erfüllen. Wenn die Schneidkantenbegrenzungsoberflächen die Kriterien erfüllen, weist die Schneidkante ebenfalls die vorgegebenen Kriterien auf.

Die für die Nachbearbeitung notwendigen Daten werden automatisch aus der Schneidwerkzeug-Oberfläche bestimmt, ohne dass der Bearbeiter hierzu manuell Eingaben tätigen muss und ohne dass der Bearbeiter Messdaten bestimmen muss. Die Nachbearbeitung wird dadurch erheblich vereinfacht. Da keine Eingabefehler auftreten können, wird die Nachbearbeitung auch exakter.

Der Schneideinsatz kann vor dem Auflöten auf den Schneidwerkzeugkörper so dimensioniert sein, dass in jedem Fall ausreichend Material zur Verfügung steht, damit im Falle eines notwendigen Materialabtrags eine Schneidkante mit den vorgegebenen Kriterien an dem Schneidwerkzeug ausgebildet werden kann. In diesem Fall steht der Schneideinsatz über den Schneidwerkzeugkörper und eine vorgegebene Schneidwerkzeug-Geometrie über. Gegebenenfalls wird die Schneidkante erst bei der Durchführung des erfindungsgemäßen Verfahrens an dem Schneidwerkzeug erzeugt.

Aus den Schneidkantenbegrenzungsoberflächen wird bestimmt, wo und wieviel Material an dem Schneideinsatz abgetragen werden muss, damit der Schneideinsatz im Bereich seiner Schneidkante vorgegebene Parameter unter Berücksichtigung von vorgegebenen Toleranzen erfüllt. Die Bewegungseinrichtung und/ oder die Materialabtragseinrichtung werden derart gesteuert, dass die Materialabtragseinrichtung dieses Material abträgt. Zu den Parametern zählen beispielsweise die Ausrichtung und/ oder die Position und/oder die Größe und/ oder die Krümmung der Schneidkantenbegrenzungsoberflächen. Hierzu können Soll-Werte und Toleranzen vorgegeben werden.

Nach einer vorteilhaften Ausgestaltung der Erfindung ist das Schneidwerkzeug ein Rotationsschneidwerkzeug, welches bei seiner Benutzung um eine geometrische Schneidwerkzeug-Rotationsachse gedreht wird. Die geometrische Schneidwerkzeug-Rotationsachse entspricht derjenigen Achse, um die das Schneidwerkzeug an seinem späteren Einsatzort gedreht wird. Vorteilhafterweise wird das als Rotationswerkzeug ausgebildete Schneidwerkzeug derart in der Fixierungseinrichtung aufgenommen, dass es mit der Bewegungseinrichtung um die geometrische Schneidwerkzeug-Rotationsachse gedreht wird.

Nach einer weiteren vorteilhaften Ausgestaltung der Erfindung wird die Ausrichtung der Schneidkantenbegrenzungsoberflächen relativ zu der geometrischen Schneidwerkzeug-Rotationsachse bestimmt. Hierbei wird ausgenutzt, dass die Schneidsätze in der Regel eine bestimmte Ausrichtung relativ zu der geometrischen Schneidwerkzeug-Rotationsachse aufweisen. Diese Ausrichtung ist Voraussetzung dafür, dass die Schneideinsätze am späteren Einsatzort des Schneidwerkzeugs den gewünschten spanenden Materialabtrag bewirken.

Nach einer weiteren vorteilhaften Ausgestaltung der Erfindung wird die Position der Schneidkantenbegrenzungsoberflächen relativ zu der geometrischen Schneidwerkzeug-Rotationsachse bestimmt. Hierbei wird ausgenutzt, dass die Schneidsätze in der Regel eine bestimmte Position bezogen auf die geometrische Schneidwerkzeug-Rotationsachse aufweisen.

Nach einer weiteren vorteilhaften Ausgestaltung der Erfindung wird die Position der Schneidkantenbegrenzungsoberfläche relativ zu einer Stirnseite des Schneidwerkzeugs bestimmt. Ist das Schneidwerkzeug als Rotationswerkzeug ausgebildet, das am Einsatzort um eine Schneidwerkzeug-Rotationsachse gedreht wird und das sich entlang der Schneidwerkzeug-Rotationsachse von einem ersten Ende bis zu einem zweiten Ende erstreckt, so handelt es sich bei der Stirnseite bevorzugt um eine zur Schneidwerkzeug-Rotationsachse senkrechte Oberfläche des Schneidwerkzeugs an dem ersten Ende oder an dem zweiten Ende.

Nach einer weiteren vorteilhaften Ausgestaltung der Erfindung werden an mindestens einer Schneidkantenbegrenzungsoberfläche mehrere Messpunkte festgelegt. An diesen Messpunkten wird bei dem in der Fixiereinrichtung angeordneten Schneidwerkzeug die der Schneidkantenbegrenzungsoberfläche entsprechende Oberfläche mittels eines Messtasters abgetastet. Dabei wird ausgenutzt, dass die Schneidkantenbegrenzungsoberfläche aus der 3-dimensionalen Schneidwerkzeug-Oberfläche abgeleitet wird und die Messpunkte für die Abtastung automatisch und ohne Zutun eines Benutzers aus der Schneidwerkzeug-Oberfläche bestimmt werden können. Ein Messtaster, der an der Bearbeitungsvorrichtung angeordnet ist, kann daraufhin entsprechend der berechneten Messpunkte gesteuert werden und die Oberfläche des Schneideinsatzes erfassen. Der Messtaster kann als mechanischer Messtaster ausbildet sein und die Oberfläche der Schneideinsätze an den Messpunkten durch Berührung erfassen. Alternativ dazu kann der Messtaster als berührungsfreier Messtaster ausgebildet sein. In diesem Fall kann die Oberfläche an den Messpunkten beispielsweise optisch erfasst werden. Vorteilhafterweise werden im Falle einer Abtastung je Schneideinsatz mindestens drei Messpunkte bestimmt. Im Unterschied zu dem Oberflächen-Scanner erfasst der Messtaster die Oberfläche des Schneidwerkzeugs nur an einer kleinen Anzahl an Messpunkten auf mindestens einer Schneidkantenbegrenzungsfläche. Der Messtaster dient nicht dazu, die gesamte Oberfläche des Schneidwerkzeugs zu erfassen, wie dies mit dem Oberflächen-Scanner erfolgt.

Nach einer weiteren vorteilhaften Ausgestaltung der Erfindung wird die Schneidkantenbegrenzungsoberfläche unter Berücksichtigung der beim Abtasten ermittelten Abtastdaten angepasst, derart dass die Abtastdaten auf der angepassten Schneidkantenbegrenzungsoberfläche liegen. Die Abtastdaten sind Teil der angepassten Schneidkantenbegrenzungsoberfläche.

Nach einer weiteren vorteilhaften Ausgestaltung der Erfindung wird anhand der beim Abtasten ermittelten Abtastdaten überprüft, ob die Schneidkantenbegrenzungsoberflächen gekrümmt oder eben sind. Sollte beispielsweise festgestellt werden, dass eine der Schneidkantenbegrenzungsoberflächen eine Krümmung aufweist, die zu einer unerwünschten Krümmung der Schneidkante führt, so kann die entsprechende Schneidkantenbegrenzungsoberfläche durch die Nachbearbeitung geglättet und in eine ebene Oberfläche überführt werden, so dass die Schneidkante einen vorgegebenen geradlinigen Verlauf aufweist. Wenn die Schneidkantenbegrenzungsflächen gemäß Vorgabe eine Krümmung aufweisen, sind für eine Abtastung mittels eines Messtasters mehr als drei Messpunkte vorzugeben. Weist auch die Schneidkante gemäß Vorgabe eine Krümmung auf, müssen die Bewegungseinrichtung und/ oder die Materialabtragseinrichtung entsprechend gesteuert werden, so dass die Schneidkante nach der Nachbearbeitung die Vorgaben in Bezug auf die Krümmung erfüllt.

Nach einer weiteren vorteilhaften Ausgestaltung der Erfindung wird anhand der Schneidkantenbegrenzungsoberflächen eine Bearbeitungsbahn der Materialabtragseinrichtung bestimmt. So wird festgelegt, wie sich die Materialabtragseinrichtung relativ zu den Schneidkantenbegrenzungsoberflächen bewegen muss, damit die Materialabtragseinrichtung gezielt Material an dem Schneideinsatz abträgt, so dass das Schneidwerkzeug nach der Nachbearbeitung die vorgegebenen Parameter mit den vorgegebenen Toleranzen erfüllt.

Nach einer weiteren vorteilhaften Ausgestaltung der Erfindung erstreckt sich die Bearbeitungsbahn der Materialabtragseinrichtung in einen Bereich, der über einen Rand mindestens einer Schneidkantenbegrenzungsoberfläche hinausgeht. Dadurch wird gewährleistet, dass die Materialabtragseinrichtung die gesamte Schneidkantenbegrenzungsoberfläche bearbeitet.

Nach einer weiteren vorteilhaften Ausgestaltung der Erfindung werden anhand der Schneidkantenbegrenzungsoberflächen ein Startpunkt und ein Endpunkt des Materialabtrags an der Schneidkantenbegrenzungsoberfläche bestimmt. An dem Startpunkt beginnt die Bearbeitung des Schneideinsatzes mit der Materialabtragseinrichtung. An dem Endpunkt wird die Bearbeitung des Schneideinsatzes beendet. Startpunkt und Endpunkt sind zwei räumlich festgelegte Punkte auf den Schneidkantenbegrenzungsoberflächen. Zwischen dem Startpunkt und dem Endpunkt findet eine fortschreitende Bearbeitung der Schneidkantenbegrenzungsoberfläche statt. Vorteilhafterweise wird die Materialabtragseinrichtung von dem Startpunkt bis zu dem Endpunkt entlang der Bearbeitungsbahn geführt.

Nach einer weiteren vorteilhaften Ausgestaltung der Erfindung umfasst die Materialabtragseinrichtung einen Laser. Ein von dem Laser erzeugter Laserstrahl wird dabei gezielt auf die Oberfläche des Schneideinsatzes gerichtet. Durch den Laserstrahl wird eine so hohe Energiedichte an der Oberfläche des Schneideinsatzes erzeugt, dass das Material des Schneideinsatzes lokal verdampft oder sublimiert. Der Materialabtrag wird auch als Laserablation oder Laserverdampfen bezeichnet. Das Material kann beispielsweise flächig in Schichten in Bereichen abgetragen werden. Vorteilhafterweise ist der Laser gepulst.

Nach einer weiteren vorteilhaften Ausgestaltung der Erfindung ist der Laser mit einer optischen Ablenkreinrichtung ausgestattet, die den Laserstrahl zusätzlich zu der Bewegungseinrichtung relativ zu dem Schneidwerkzeug bewegt. Es können damit zwei Bewegungen des Laserstrahls relativ zu dem Schneidwerkzeug erzeugt werden: eine erste Bewegung mittels der Bewegungseinrichtung und eine zweite Bewegung mittels der Ablenkeinrichtung des Lasers. Die erste Bewegung und die zweite Bewegung sind überlagert. In der Regel können mit der optischen Ablenkeinrichtung höhere Geschwindigkeiten realisiert werden als mit der Bewegungseinrichtung. Bei der optischen Ablenkeinrichtung kann es sich beispielsweise um einen Laser-Scanner handeln.

Nach einer weiteren vorteilhaften Ausgestaltung der Erfindung umfasst die Materialabtragseinrichtung eine Schleifscheibe. Der Materialabtrag erfolgt in diesem Fall mittels eines Schleifvorgangs.

Nach einer weiteren vorteilhaften Ausgestaltung der Erfindung trägt die Materialabtragseinrichtung Material mittels Electrical Discharge Machining EDM ab.

Nach einer weiteren vorteilhaften Ausgestaltung der Erfindung besteht der Schneideinsatz aus einem ultraharten Material wie polykristalliner Diamant (PCD), kubisches Bornitrid (CBN), Diamant aus der Gasphasenabscheidung (CVD), einkristalliner Diamant oder Keramik. Im Falle einer Beschichtung kann diese durch CVD aufgetragen sein. Alternativ dazu kann auch diamantähnlicher amorpher Kohlenstoff DLC eingesetzt werden.

Nach einer weiteren vorteilhaften Ausgestaltung der Erfindung wird die 3-dimensionale Schneidwerkzeug-Oberfläche aus den vorgegebenen CAD-Daten des Schneidwerkzeugs bestimmt. Durch das rechnergestützte Konstruieren und Herstellen des Schneidwerkzeugs mit mindestens einem Schneideinsatz ist ein geometrisches Modell des Schneidwerkzeugs als digitaler Datensatz vorhanden. Die CAD-Daten enthalten diesen digitalen Datensatz. Durch Berechnung kann aus den CAD-Daten die theoretische geometrische 3-dimensionale Schneidwerkzeug-Oberfläche bestimmt werden. Da die CAD-Daten von dem geometrischen Modell stammen, enthalten sie nicht die Ungenauigkeiten, die aus der Herstellung der Schneideinsätze und aus dem Auflöten der Schneideinsätze auf den Schneidwerkzeugkörper resultieren. Sie geben daher nicht in identischer Weise die Realität wieder. Aus diesem Grund kann es vorteilhaft sein, Messpunkte an der Oberfläche der Schneideinsätze zu bestimmen, die die tatsächlichen realen Schneidkantenbegrenzungsoberflächen durch Abtastung an den Messpunkten mittels eines Messtasters zu erfassen und die Schneidkantenbegrenzungsoberflächen an die Abtastdaten anzupassen.

Nach einer weiteren vorteilhaften Ausgestaltung der Erfindung wird die 3-dimensionale Schneidwerkzeug-Oberfläche mittels eines Oberflächen-Scanners erzeugt. Der Oberflächen-Scanner ist mit einem oder mehreren Sensoren ausgestattet, die das Schneidwerkzeug auf systematische und regelmäßige Weise abtasten oder vermessen. Durch eine Vielzahl von Einzelmessungen wird ein Gesamtbild des Schneidwerkzeugs erzeugt. Die von den Sensoren erfassten Messwerte werden in digitale Daten umgewandelt und mittels eines Computers verarbeitet. Aus diesen Daten kann durch Berechnung die 3-dimensionale Schneidwerkzeug-Oberfläche bestimmt werden. Es kann davon ausgegangen werden, dass die mit dem Oberflächen-Scanner erfasste 3-dimensionale Schneidwerkzeug-Oberfläche die reale Oberfläche des Schneidwerkzeugs sehr gut wiedergibt. Daher ist es nicht zwingend notwendig, an der Oberfläche des Schneideinsatzes Messpunkte festzulegen und die Oberfläche an diesen Messpunkten mit einem Messtaster zu erfassen. Dennoch kann zu Kontrollzecken eine zusätzliche Abtastung mit einem Messtaster erfolgen. Wird beispielsweise bei einer derartigen Kontrolle an einer Oberfläche des Schneideinsatzes festgestellt, dass die mit dem Messtaster bestimmten Abtastdaten Teil der 3-dimensionalen Schneidwerkzeug-Oberfläche ist, die mit dem Oberflächen-Scanner erfasst wurde, so braucht keine weitere Kontrolle an den übrigen Oberflächen den Schneideinsatzes durchgeführt werden. Werden dagegen Abweichungen festgestellt, kann die Kontrolle fortgesetzt werden.

Nach einer weiteren vorteilhaften Ausgestaltung der Erfindung wird über die 3-dimensionale Schneidwerkzeug-Oberfläche ein Gitter aus Teilflächen gelegt. Zu jeder Teilfläche wird die Ausrichtung relativ zu einer Bezugsgröße, beispielsweise zu der geometrischen Schneidwerkzeug-Rotationsachse, bestimmt. Hieraus werden die Schneidkantenbegrenzungsoberflächen bestimmt.

Nach einer weiteren vorteilhaften Ausgestaltung der Erfindung sind die Teilflächen Dreiecke. Alternativ dazu können die Teilflächen auch Vierecke oder sonstige Polygone sein.

Nach einer weiteren vorteilhaften Ausgestaltung der Erfindung wird die Ausrichtung je zweier benachbarter Teilflächen miteinander verglichen. Hieraus werden die Schneidkantenbegrenzungsoberflächen bestimmt. Dabei wird ausgenutzt, dass Teilflächen, welche die gleiche oder eine ähnliche Ausrichtung aufweisen, zu derselben Schneidkantenbegrenzungsoberfläche gehören.

Weitere Vorteile und vorteilhafte Ausgestaltungen der Erfindung sind der nachfolgenden Beschreibung, der Zeichnung und den Ansprüchen entnehmbar.

### Zeichnung

In der Zeichnung sind Ausführungsbeispiele des Erfindungsgegenstandes dargestellt. Es zeigen:
- Figur 1: perspektivische Darstellung eines ersten Ausführungsbeispiels eines Schneidwerkzeugs, welches mit dem erfindungsgemäßen Verfahren bearbeitet wird, Darstellung auf der Basis von CAD-Daten,
- Figur 2: perspektivische Darstellung des Schneidwerkzeugs gemäß Figur 1 auf der Basis von Daten, welche mittels eines Oberflächen-Scanners ermittelt wurden, Darstellung anhand von Dreiecken
- Figur 3: Darstellung gemäß Figur 2 anhand von unterschiedlichen Graustufen,
- Figur 4: perspektivische Darstellung des Schneidwerkzeugs gemäß Figuren 1, 2 und 3 nach Abschluss der Nachbearbeitung mit dem erfindungsgemäßen Verfahren,
- Figur 5: Darstellung des Schneidwerkzeugs gemäß Figur 1, wobei die äußere Schneidwerkzeug-Geometrie markiert ist,
- Figur 6: Darstellung des Schneidwerkzeugs gemäß Figur 1 mit der Bearbeitungsbahn einer Materialabtragseinrichtung,
- Figur 7: Darstellung des Schneidwerkzeugs gemäß Figur 1 mit Markierung der Messpunkte, an denen die Oberfläche eines Schneideinsatzes mit einem Messtaster abgetastet wird,
- Figur 8: Vergleich der CAD-Daten und der mit dem Oberflächen-Scanner ermittelten Daten zu dem Schneidwerkzeug gemäß Figuren 1 bis 7,
- Figur 9: perspektivische Darstellung eines zweiten Ausführungsbeispiels eines Schneidwerkzeugs, welches mit dem erfindungsgemäßen Verfahren bearbeitet wird, Darstellung auf der Basis von CAD-Daten,
- Figur 10: perspektivische Darstellung des Schneidwerkzeugs gemäß Figur 9 auf der Basis von Daten, welche mittels eines Oberflächen-Scanners ermittelt wurden,
- Figur 11: Ausschnitt aus Figur 9,
- Figur 12: Ausschnitt aus Figur 11,
- Figur 13: Teil des Schneidwerkzeugs gemäß Figuren 9 und 10 nach Abschluss der Nachbearbeitung mit dem erfindungsgemäßen Verfahren,
- Figur 14: Bearbeitungsvorrichtung zur Durchführung des Verfahrens.

### Beschreibung der Ausführungsbeispiele

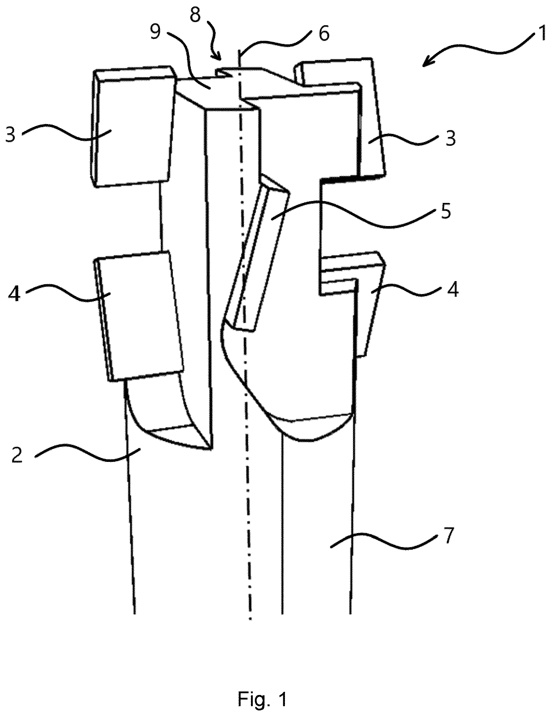

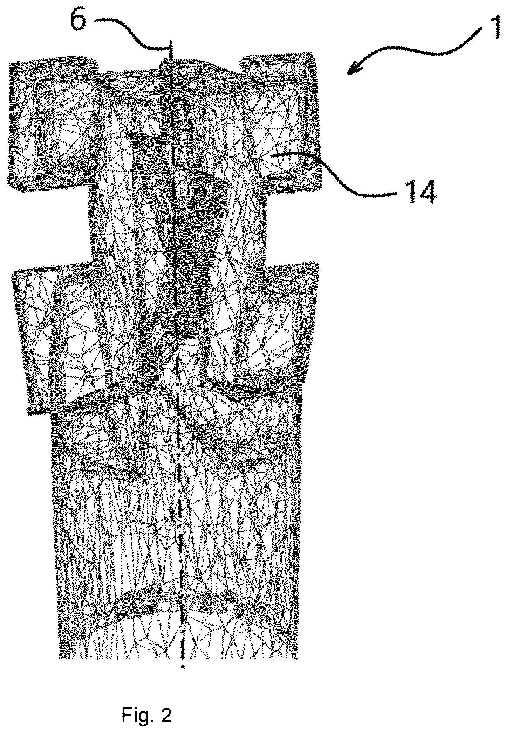

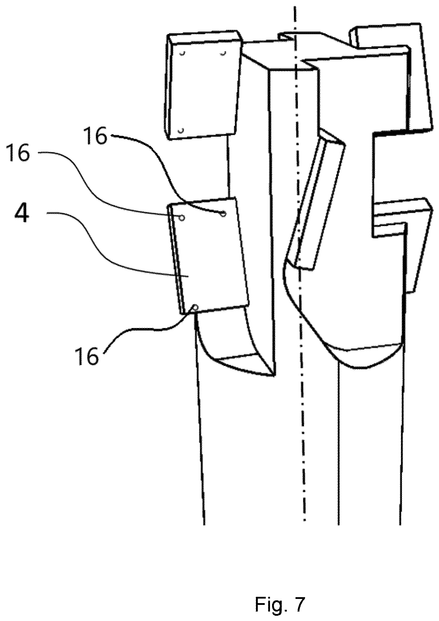

In den Figuren 1 bis 8 ist ein erstes Schneidwerkzeug dargestellt, das mit dem erfindungsgemäßen Verfahren bearbeitet wird. Figuren 1 und 2 zeigen das Schneidwerkzeug vor der Bearbeitung. Dabei entspricht Figur 1 einer Darstellung der CAD-Daten des Schneidwerkzeugs, die durch die Konstruktion des Schneidwerkzeugs mittels CAD vorgegeben sind. Figur 2 entspricht einer Darstellung von Daten, die anhand eines Oberflächen-Scanners ermittelt wurden. Das Schneidwerkzeug 1 umfasst einen Schneidwerkzeugkörper 2, an dem insgesamt sechs Schneideinsätze 3, 4, 5 angeordnet sind. Bei dem Schneidwerkzeug handelt es sich um ein Rotationswerkzeug, das an seinem Einsatzort um eine geometrische Schneidwerkzeug-Rotationsachse 6 gedreht wird. Das Schneidwerkzeug ist in der Zeichnung nicht vollständig dargestellt. Ein Schaft 7, der der Aufnahme des Schneidwerkzeugs 1 in eine nicht dargestellte Maschine dient, ist aus Gründen der Übersichtlichkeit nur teilweise dargestellt. In dem nicht dargestellten Teil des Schneidwerkzeugs sind keine Schneideinsätze angeordnet. Daher findet in dem nicht dargestellten Teil des Schneidwerkzeugs keine Bearbeitung mit dem Verfahren statt. Der Abschnitt des Schneidwerkzeugs 1, in dem die Schneideinsätze 3, 4, 5 am Schneidwerkzeugkörper 2 angeordnet sind, ist als 3-dimensionale Schneidwerkzeug-Oberfläche definiert. Diese 3-dimensionale Schneidwerkzeug-Oberfläche ist in den Figuren 1 und 2 zumindest insoweit erkennbar, wie sie dem Betrachter zugewandt ist. Die dem Betrachter abgewandten Teile der 3-dimensionalen Schneidwerkzeug-Oberfläche sind in den Figuren 1 und 2 durch den Schneidwerkzeugkörper 2 verdeckt.

Die Schneideinsätze 3, 4, 5 sind bezogen auf die Schneidwerkzeug-Rotationsachse versetzt angeordnet. Die beiden ersten Schneideinsätze 3 befinden sich an einem Ende 8 des Schneidwerkzeugs. Sie sind um 180° versetzt zueinander am Schneidwerkzeugkörper 2 angeordnet und gegenüber der Schneidwerkzeug-Rotationsachse um einen Winkel α geneigt. Die beiden zweiten Schneideinsätze 4 sind in axialer Richtung bezogen auf die Schneidwerkzeug-Rotationsachse 6 mit einem Abstand zu dem Ende 8 und zu den beiden ersten Schneideinsätzen 3 angeordnet. Sie sind in axialer Richtung versetzt zu den ersten Schneideinsätzen 3 an dem Schneidwerkzeugkörper aufgenommen. Der Winkelabstand zwischen den beiden zweiten Schneideinsätzen beträgt ebenfalls 180°. Die beiden dritten Schneideinsätze 5 befindet sich bezogen auf ihre axiale Position und bezogen auf ihre Winkelposition zwischen den beiden ersten und zweiten Schneideinsätzen 3, 4. In der Zeichnung ist nur einer der beiden dritten Schneideinsätze 5 erkennbar, da der andere dritte Schneideinsatz 5 durch den Schneidwerkzeugkörper 2 verdeckt ist.

Die ersten, zweiten und dritten Schneideinsätze 3, 4, 5 werden auf den Schneidwerkzeugkörper 2 aufgelötet. Nach dem Auflöten stehen die Schneideinsätze 3, 4, 5 zunächst radial nach außen über den Schneidwerkzeugkörper 2 über. Die Figuren 1 und 2 zeigen das Schneidwerkzeug nach dem Auflöten der Schneideinsätze 3, 4, 5. Insbesondere bei den ersten Schneideinsätzen 3 und bei den zweiten Schneideinsätzen 4 ist der radial über den Schneidwerkzeugkörper überstehende Abschnitt deutlich sichtbar.

Figur 1 zeigt eine Darstellung des Schneidwerkzeugs 1 vor einer Bearbeitung mit dem Verfahren, wobei die Darstellung auf CAD-Daten beruht. Diese CAD-Daten ergeben sich aus dem rechnergestützten Konstruieren des Schneidwerkzeugs. Dargestellt ist die 3-dimensionale Schneidwerkzeug-Oberfläche, welche die Schneideinsätze 3, 4, 5 umfasst.

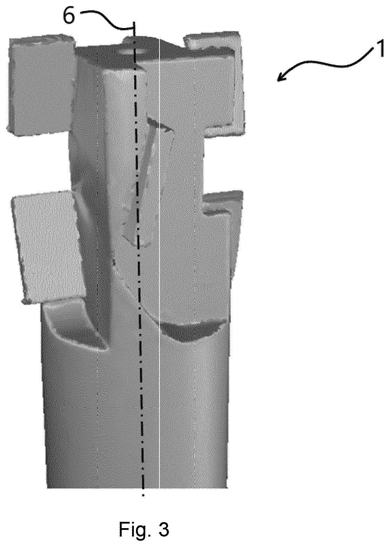

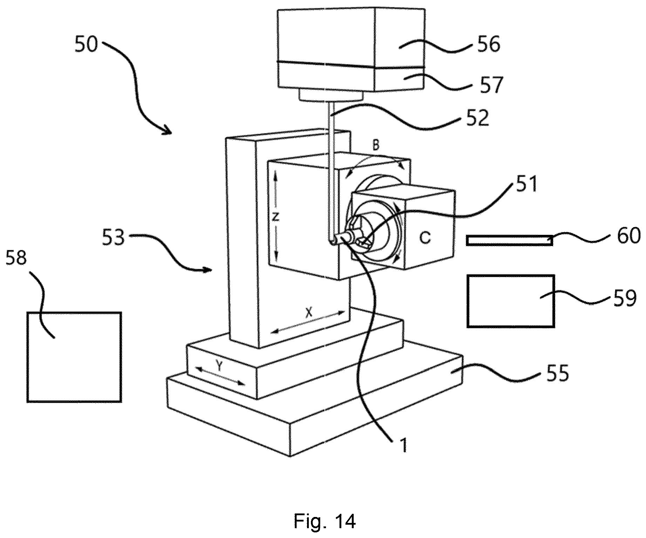

Figur 2 zeigt eine Darstellung des Schneidwerkzeugs 1 vor der Bearbeitung mit dem Verfahren, wobei die Darstellung auf Daten beruht, die mittels eines Oberflächen-Scanners ermittelt wurden. Dieser Oberflächen Scanner ist in Figur 14 dargestellt. Mit dem Oberflächen-Scanner wird die Oberfläche des Schneidwerkzeugs 1 von allen Seiten in den Abschnitten erfasst, in denen die Schneideinsätze 3, 4, 5 angeordnet sind. Daraus ergibt sich die 3-dimensionale Schneidwerkzeug-Oberfläche, die für die Durchführung des Verfahrens wesentlich ist. Gemäß Figur 2 wurde die Oberfläche des Schneidwerkzeugs 1 in genau dem Abschnitt des Schneidwerkzeugs 1 erfasst, der auch in Figur 1 auf der Grundlage der CAD-Daten dargestellt ist. Durch den Oberflächen-Scanner ergibt sich eine Menge an Oberflächenpunkten. Diese sind in Figur 2 durch Striche derart miteinander verbunden, dass sich Dreiecke ergeben. Figur 3 zeigt eine alternative Darstellung, die auf der gleichen Menge an Oberflächenpunkten beruht wie Figur 2, jedoch sind anstelle von Dreiecken unterschiedliche Graustufen gezeigt. Die Form des Schneidwerkzeugs 1 ist in dieser Darstellung besser erkennbar als in Figur 2.

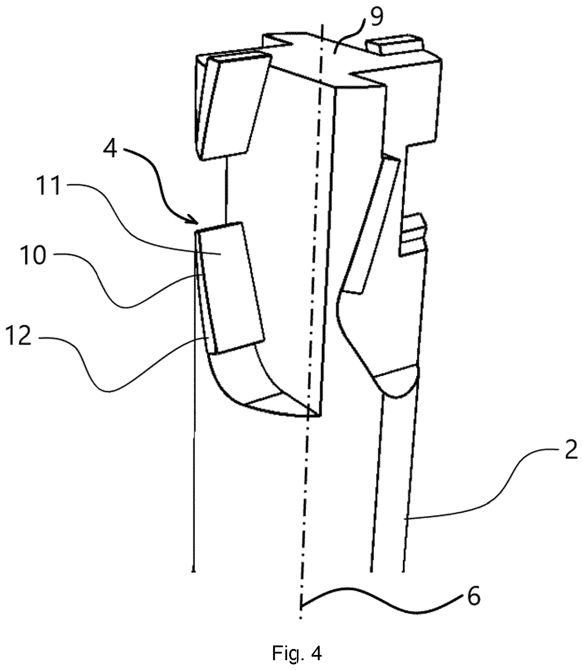

Figur 4 zeigt das Schneidwerkzeug 1 mit den Schneideinsätzen 3, 4, 5, wobei die Schneideinsätze hinsichtlich der Position und des Verlaufs ihrer Schneidkanten 10 vorgegebene Kriterien erfüllen. Die Schneideinsätze 3, 4, 5 stehen deutlich weniger über den Schneidwerkzeugkörper 2 radial nach außen über. Beispielhaft ist anhand des zweiten Schneideinsatzes 4 dargestellt, dass die Schneidkante 10 eine erste Schneidkantenbegrenzungsoberfläche 11 und eine zweite Schneidkantenbegrenzungsoberfläche 12 begrenzt. Entsprechendes gilt für die ersten Schneideinsätze 3 und die dritten Schneideinsätze 5.

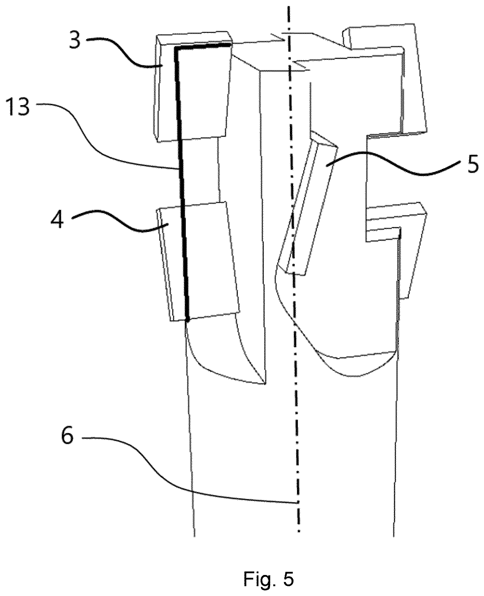

Figur 5 zeigt das Schneidwerkzeug 1 gemäß Figur 1 und Figur 2, wobei die äußere Geometrie 13 des Schneidwerkzeugs, welche durch den vorgegebenen Verlauf der Schneidkanten 10 der Schneideinsätze 3, 4, 5 definiert ist, anhand einer Linie im Bereich des ersten Schneideinsatzes 3 und des zweiten Schneideinsatzes markiert ist. Aus dieser Darstellung ergibt sich, dass der über die äußere Geometrie 13 des Schneidwerkzeugs 1 überstehende Bereich der Schneideinsätze 3, 4, 5 entfernt werden muss. Insbesondere muss eine Nachbearbeitung an einer ersten Schneidkantenbegrenzungsoberfläche 11a und/ oder einer zweiten Schneidkantenbegrenzungsoberfläche 12a erfolgen, so dass diese innerhalb von Toleranzen mit der ersten Schneidkantenbegrenzungsoberfläche 11 und der zweite Schneidkantenbegrenzungsoberfläche 12 gemäß Figur 4 übereinstimmen und die Schneidkante 10 dadurch den vorgegebenen Verlauf aufweist.

Um eine Bearbeitung der Schneideinsätze 3, 4, 5 im Bereich der Schneidkantenbegrenzungsoberflächen 11a, 12a zu ermöglichen, werden mit dem Verfahren aus der 3-dimensionalen Schneidwerkzeug-Oberfläche gemäß Figur 1 oder gemäß Figur 2 oder 3 zunächst die Schneidkantenbegrenzungsoberflächen 11a, 12a bestimmt. Diese ergeben sich durch einen Vergleich der Ausrichtung oder der Position der Oberflächen mit der Schneidwerkzeug-Rotationsachse 6 oder einer Stirnseite 9 des Schneidwerkzeugs. Hierzu wird die 3-dimensionale Schneidwerkzeug-Oberfläche in ein Gitter aus Teilflächen 14 zerlegt. In der Darstellung gemäß Figur 2 entspricht das Gitter mit den Teilflächen 14 den Dreiecken, die sich aus der Verbindung der Oberflächenpunkte ergeben. Zu jeder Teilfläche 14 wird die Ausrichtung relativ zu der geometrischen Schneidwerkzeug-Rotationsachse 6 bestimmt. Alternativ oder kumulativ kann auch zu jeder Teilfläche 14 die Ausrichtung relativ zu der Stirnseite 9 des Schneidwerkzeugs bestimmt werden. Teilflächen 14, die die gleiche Ausrichtung aufweisen, werden einer gemeinsamen Oberfläche zugeordnet. Schneidkantenbegrenzungsoberflächen 11a, 12a zeichnen sich gegenüber anderen Oberflächen des Schneidwerkzeugs 1 dadurch aus, dass sie eine ganz bestimmte vorgegebene Ausrichtung relativ zu der Schneidwerkzeug-Rotationsachse 6 oder zu der Stirnseite 9 aufweisen.

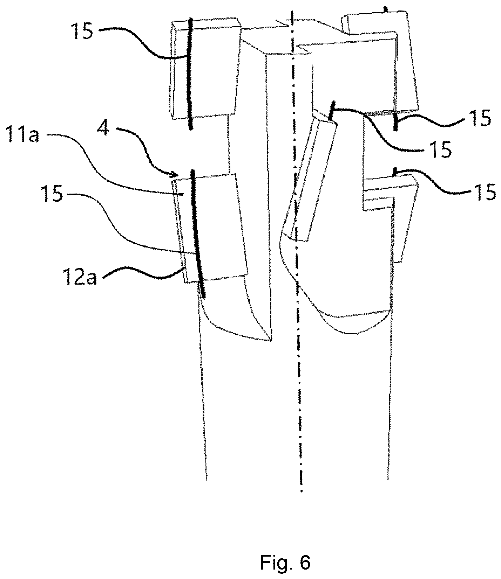

Wenn die Schneidkantenbegrenzungsoberflächen 11a, 12a aus der 3-dimensionalen Schneidwerkzeug-Oberfläche bestimmt sind, werden sie mit den vorgegebenen Schneidkantenbegrenzungsoberflächen 11, 12 gemäß Figur 4 verglichen. Aus diesem Vergleich ergibt sich, ob und wieviel Material an den erfassten Schneidkantenbegrenzungsoberflächen 11a, 12a abgetragen werden muss, damit die Schneidkante 10 den vorgegebenen Verlauf mit der vorgegebenen äußeren Geometrie 13 aufweist. Hieraus wiederum wird die Bearbeitungsbahn 15 einer Materialabtragseinrichtung bestimmt. In Figur 6 ist diese Bearbeitungsbahn 15 an den ersten, zweiten und dritten Schneideinsätzen 3, 4, 5 dargestellt. Die Bearbeitungsbahn 15 erstreckt sich über die Schneidkantenbegrenzungsoberflächen 11a, 12a hinaus, so dass gewährleistet ist, dass die gesamte Schneidkantenoberfläche 11a, 12a bearbeitet wird.

Im vorliegenden Ausführungsbeispiel handelt es sich bei der Bearbeitungsmaschine um eine Laserbearbeitungsmaschine, welche in Figur 14 dargestellt ist. Die Materialabtragseinrichtung umfasst in diesem Fall einen Laser. Ein Laserstrahl des Lasers wird auf die erste Schneidkantenbegrenzungsoberfläche 11a gerichtet und Material abtragen. Hierzu wird der Laserstrahl einmal oder mehrmals entlang der Bearbeitungsbahn 15 geführt, bis die beiden Schneidkantenoberflächen 11, 12 und die Schneidkante 13 gemäß Figur 4 erzeugt sind. Alternativ dazu kann der Materialabtrag auch ausgehend von der zweiten Schneidkantenbegrenzungsoberfläche 12a beginnen. In diesem Fall kann die Bearbeitungsbahn einen anderen Verlauf aufweisen als in Figur 6 dargestellt.

Wenn die sich aus den CAD-Daten gemäß Figur 1 ergebende 3-dimensionale Schneidwerkzeug-Oberfläche die Realität nicht ausreichend gut abbildet oder eine Überprüfung der 3-dimensionalen Schneidwerkzeug-Oberfläche gemäß Figur 1, 2 oder 3 gewünscht ist, können an mindestens einer Schneidkantenbegrenzungsoberfläche 11a Messpunkte bestimmt werden, an denen zusätzlich eine Abtastung des realen Schneidwerkzeugs durchgeführt wird. Im vorliegenden Fall werden drei Messpunkte 16 an der ersten Schneidkantenbegrenzungsoberfläche 11a bestimmt. Anschließend wird mittels eines optischen oder mechanischen Messtasters die Position der Oberfläche an diesen drei Messpunkten 16 erfasst. Die sich daraus ergebenden Messdaten werden mit der Schneidkantenbegrenzungsoberfläche 11a an diesen Messpunkten 16 verglichen. Im Falle einer Abweichung wird die Schneidkantenbegrenzungsoberfläche 11a entsprechend korrigiert und angepasst, so dass die Messdaten auf der Schneidkantenbegrenzungsoberfläche 11a liegen. Eine derartige Überprüfung des Schneidkantenbegrenzungsflächen 11a, 12a kann auch dann durchgeführt werden, wenn die 3-dimensionale Schneidwerkzeug-Oberfläche mittels eines Oberflächen-Scanners gemäß Figur 2 oder 3 bestimmt wird. Da der Oberflächen-Scanner bereits die Oberfläche des realen Schneidwerkzeugs erfasst, wird davon ausgegangen, dass in diesem Fall eine Überprüfung nur in Ausnahmefällen oder zu Kontrollzwecken notwendig ist.

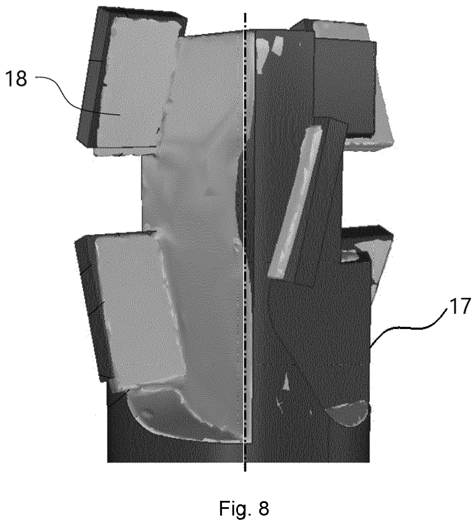

Figur 8 zeigt einen Vergleich der mittels CAD-Daten bestimmten 3-dimensionalen Schneidwerkzeug-Oberfläche 17 mit der 3-dimensionalen Schneidwerkzeug-Oberfläche 18, welche mittels eines Oberflächen-Scanners ermittelt wurde. In den hellgrauen Bereichen steht die mit dem Oberflächen-Scanner ermittelte 3-dimensionale Schneidwerkzeug-Oberfläche 18 über die mit CAD-Daten bestimmte 3-dimensionale Schneidwerkzeug-Oberfläche 17 über. In den dunkelgrauen Bereich ist es genau umgekehrt.

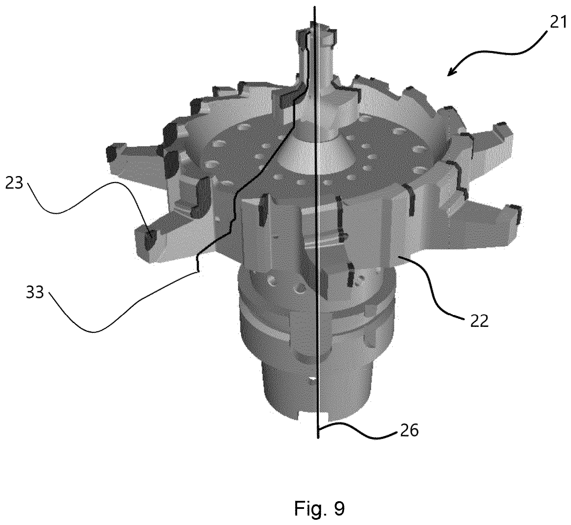

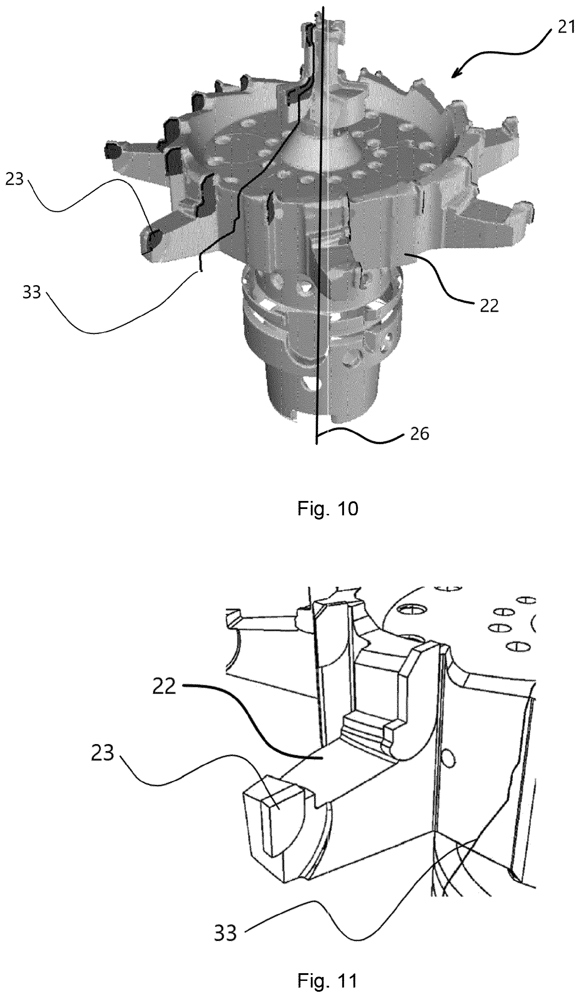

In den Figuren 9 bis 13 ist ein zweites Ausführungsbeispiel eines Schneidwerkzeugs 21 dargestellt, das mit dem erfindungsgemäßen Verfahren bearbeitet wird. Die Figuren 9 und 10 zeigen das Schneidwerkzeug 21 vor der Bearbeitung. Dabei entspricht Figur 9 einer Darstellung der CAD-Daten des Schneidwerkzeugs 21, die durch die Konstruktion des Schneidwerkzeugs mittels CAD vorgegeben sind. Figur 10 entspricht einer Darstellung von Daten, die anhand eines Oberflächen-Scanners ermittelt wurden. Das Schneidwerkzeug 21 umfasst einen Schneidwerkzeugkörper 22, an dem eine Vielzahl von Schneideinsätzen 23 angeordnet sind. Bei dem Schneidwerkzeug handelt es sich um ein Rotationswerkzeug, das an seinem Einsatzort um eine geometrische Schneidwerkzeug-Rotationsachse 26 gedreht wird. Im Unterschied zu dem ersten Ausführungsbeispiel eines Schneidwerkzeugs gemäß Figuren 1 bis 8 sind bei dem Schneidwerkzeug 21 gemäß zweitem Ausführungsbeispiel alle Schneideinsätze 23 an der gleichen axialen Position bezogen auf die Schneidwerkzeug-Rotationsachse 26 und mit der gleichen Ausrichtung bezogen auf die Schneidwerkzeug-Rotationsachse 26 an dem Schneidwerkzeugkörper 22 angeordnet.

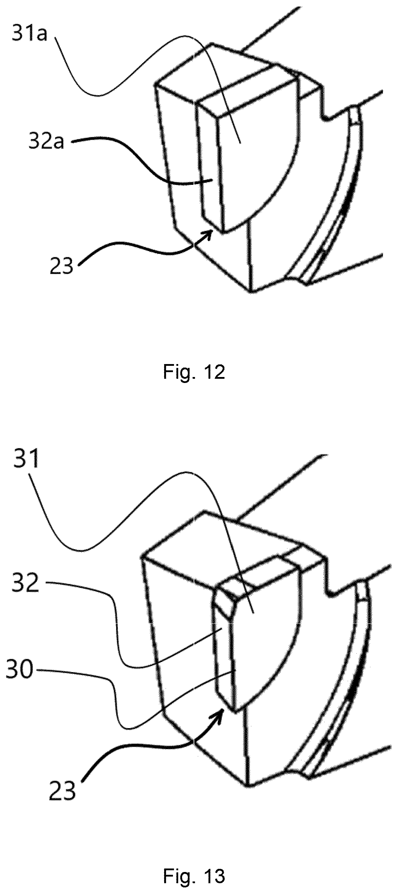

Zu jedem an dem Schneidwerkzeugkörper 22 angeordneten Schneideinsatz 23 sind Kriterien für den Verlauf und die Position einer Schneidkante 30 des Schneideinsatzes 23 bezogen auf die Schneidwerkzeug-Rotationsachse 26 des Schneidwerkzeugs vorgegeben. Diese vorgegebene Schneidkante 30 ist in Figur 13 dargestellt. Die vorgegebene Schneidkante 30 begrenzt eine erste Schneidkantenbegrenzungsoberfläche 31 und eine zweite Schneidkantenbegrenzungsfläche 32. Durch den Verlauf und die Position der Schneidkanten 30 aller Schneideinsätze 23 des Schneidwerkzeugs 21 ist eine äußere Geometrie 33 des Schneidwerkzeugs 21 vorgegeben. Diese äußere Geometrie 33 ist anhand einer Linie in den Figuren 9 und 10 markiert.

Zur Durchführung des Verfahrens werden aus der 3-dimensionalen Schneidwerkzeug-Oberfläche der CAD-Daten gemäß Figur 9 oder der mit einem Oberflächen-Scanner ermittelten Daten gemäß Figur 10 die Schneidkantenbegrenzungsoberflächen 31a, 32a der Schneideinsätze 23 bestimmt und mit den vorgegebenen Schneidkantenbegrenzungsoberflächen 31, 32 verglichen. Die Figuren 11 und 12 zeigen exemplarisch an einem Schneideinsatz 23 die beiden Schneidkantenbegrenzungsflächen 31a und 32a.

Aus dem Vergleich mit den Vorgaben für die Schneidkante 30, die erste Schneidkantenbegrenzungsoberfläche 31 und die zweite Schneidkantenbegrenzungsoberfläche 32 ergibt sich, dass ein Materialabtrag erfolgen muss und in welchem Umfang der Materialabtrag erfolgen muss. Die Bearbeitungsvorrichtung wird anhand der dabei ermittelten Daten gesteuert, so dass das entsprechende Material abgetragen und die Schneidkante 30 die in Figur 13 dargestellten Vorgaben erfüllt.

Die Bestimmung der Position und der Ausrichtung der Schneidkantenbegrenzungsoberflächen 31a, 32a aus der 3-dimensionalen Schneidwerkzeug-Oberfläche erfolgt entsprechend zu dem ersten Ausführungsbeispiel gemäß den Figuren 1 bis 8.

In Figur 14 ist eine Bearbeitungsvorrichtung 50 zur Durchführung des Verfahrens dargestellt. Die Bearbeitungsvorrichtung ist eine Laserbearbeitungsvorrichtung. Sie umfasst eine Fixiereinrichtung 51, welche ein Schneidwerkzeug 1 aufnimmt und fixiert, eine Bewegungseinrichtung 53, welche das in der Fixiereinrichtung angeordnete Schneidwerkzeug 1 relativ zu einer Vorrichtungsbasis 55 bewegt, einen Laser 56, der einen Laserstrahl 52 erzeugt und eine Laserstrahl-Ablenkeinrichtung 57, welche den Laserstrahl 52 führt. Die Bewegungseinrichtung 53 weist im vorliegenden Fall drei lineare Achsen X, Y, Z und zwei Rotationsachsen B und C auf. Die Rotationsachse C sorgt dabei für eine Rotation des in der Werkstück-Fixiereinrichtung 51 angeordneten Schneidwerkzeugs 1 um eine geometrische Schneidwerkzeug-Rotationsachse, welche sich durch das Schneidwerkzeug hindurch erstreckt. Die Laserstrahl-Ablenkeinrichtung 57 bewegt und führt den Laserstrahl 52 in drei verschiedene Richtungen im Raum. Dabei wird der Laserstrahl 52 entlang eines in Figur 14 nicht dargestellten Laserpfads relativ zum Schneidwerkzeug 1 bewegt. Eine Steuerungseinrichtung 58 steuert die Fixiereinrichtung 51, die Bewegungseinrichtung 53 und die Laserstrahl-Ablenkeinrichtung 57, um das Verfahren zur Bearbeitung des Werkstücks durchzuführen.

Die Bearbeitungsvorrichtung 50 ist ferner mit einem Oberflächen-Scanner 59 ausgestattet, der die Oberfläche des in der Fixiereinrichtung 51 angeordneten Schneidwerkzeugs 1 erfasst und die dabei bestimmte 3-dimensionale Schneidwerkzeug-Oberfläche abspeichert. Diese 3-dimensionale Schneidwerkzeug-Oberfläche wird an die Steuerungseinrichtung 58 ausgegeben, die daraus die Schneidkantenbegrenzungsoberflächen der Schneideinsätze bestimmt, mit Vorgaben bezüglich der Schneidkanten vergleicht, daraus das abzutragende Material ermittelt und den Laserstrahl steuert, um gezielt dieses Material von den Schneideinsätzen des Schneidwerkzeugs 1 abzutragen.

Zu Kontroll- und Prüfzwecken ist die Bearbeitungsvorrichtung darüber hinaus mit einem Messtaster 60 ausgestattet, um an einzelnen Messpunkten die Oberfläche des in der Fixiereinrichtung angeordneten Schneidwerkzeugs 1 abzutasten und mit den Schneidkantenbegrenzungsflächen zu vergleichen.

Sämtliche Merkmale der Erfindung können sowohl einzeln als auch in beliebiger Kombination miteinander erfindungswesentlich sein.

### Bezugszahlen

- 1: Schneidwerkzeug
- 2: Schneidwerkzeugkörper
- 3: Erster Schneideinsatz
- 4: Zweiter Schneideinsatz
- 5: Dritter Schneideinsatz
- 6: Schneidwerkzeug-Rotationsachse
- 7: Schaft
- 8: Ende
- 9: Stirnseite
- 10: Schneidkante
- 11: Erste Schneidkantenbegrenzungsoberfläche nach der Bearbeitung
- 11a: Erste Schneidkantenbegrenzungsoberfläche vor der Bearbeitung
- 12: Zweite Schneidkantenbegrenzungsoberfläche nach der Bearbeitung
- 12a: Zweite Schneidkantenbegrenzungsoberfläche vor der Bearbeitung
- 13: Äußere Geometrie des Schneidwerkzeugs
- 14: Teilfläche
- 15: Bearbeitungsbahn einer Materialabtragseinrichtung
- 16: Messpunkt
- 17: Mittels CAD-Daten bestimmte 3-dimensionale Schneidwerkzeug-Oberfläche
- 18: Mittels Oberflächen-Scanner bestimmte 3-dimensionale Schneidwerkzeug-Oberfläche
- 21: Schneidwerkzeug
- 22: Schneidwerkzeugkörper
- 23: Schneideinsatz
- 26: Schneidwerkzeug-Rotationsachse
- 30: Schneidkante
- 31: Erste Schneidkantenbegrenzungsoberfläche nach der Bearbeitung
- 31a: Erste Schneidkantenbegrenzungsoberfläche vor der Bearbeitung
- 32: Zweite Schneidkantenbegrenzungsoberfläche nach der Bearbeitung
- 32a: Zweite Schneidkantenbegrenzungsoberfläche vor der Bearbeitung
- 33: Äußere Geometrie des Schneidwerkzeugs
- 50: Bearbeitungsvorrichtung
- 51: Fixiereinrichtung
- 52: Laserstrahl
- 53: Bewegungseinrichtung
- 55: Vorrichtungsbasis
- 56: Laser
- 57: Laserstrahl-Ablenkeinrichtung
- 58: Steuerungseinrichtung
- 59: Oberflächen-Scanner
- 60: Messtaster

## Patentansprüche

1. Verfahren zur Bearbeitung eines Schneidwerkzeugs (1, 21), welches einen Schneidwerkzeugkörper (2, 22) und mindestens einen an dem Schneidwerkzeugkörper (2, 22) befestigten Schneideinsatz (3, 4, 5, 23) mit mindestens einer Schneidkante (10, 30) aufweist, wobei die Bearbeitung anhand einer Bearbeitungsvorrichtung (50) erfolgt, welche eine das Schneidwerkzeug (1, 21) aufnehmende und fixierende Fixiereinrichtung (51), eine an der Oberfläche des Schneidwerkzeugs (1, 21) Material abtragende Materialabtragseinrichtung (56) und eine Bewegungseinrichtung (53) aufweist, wobei die Bewegungseinrichtung (53) das in der Fixiereinrichtung (51) aufgenommene Schneidwerkzeug (1, 21) und die Materialabtragseinrichtung (56) zum gezielten Materialabtrag relativ zueinander bewegt, **gekennzeichnet durch** folgende Verfahrensschritte:
- Fixieren des Schneidwerkzeugs (1, 21) in der Fixiereinrichtung (51),
- Vorgeben einer 3-dimensionalen Oberfläche des in der Fixiereinrichtung (51) angeordneten Schneidwerkzeugs (1, 21) zumindest in denjenigen Abschnitten des Schneidwerkzeugs (1, 21), in denen der Schneideinsatz (3, 4, 5, 23) am Schneidwerkzeugkörper (2, 22) angeordnet ist, wobei diese Oberfläche als 3-dimensionale Schneidwerkzeug-Oberfläche (17, 18) definiert wird,
- Bestimmen derjenigen Teilbereiche der 3-dimensionalen Schneidwerkzeug-Oberfläche (17, 18), die eine Oberfläche des Schneideinsatzes (3, 4, 5, 23) bilden und benachbart zu einer Schneidkante (10, 30) des Schneideinsatzes (3, 4, 5, 23) angeordnet sind, wobei diese Teilbereiche als Schneidkantenbegrenzungsoberflächen (11a, 12a, 31a, 32a) definiert werden,
- Steuern der Bewegungseinrichtung (53) und/ oder der Materialabtragseinrichtung (56) anhand der Schneidkantenbegrenzungsoberflächen (11a, 12a, 31a, 32a)
wobei aus den Schneidkantenbegrenzungsoberflächen (11a, 12a, 31a, 32a) bestimmt wird, wo und wieviel Material an dem Schneideinsatz (3, 4, 5, 23) abgetragen werden muss, damit der Schneideinsatz (3, 4, 5, 23) im Bereich seiner Schneidkante (10, 30) vorgegebene Parameter unter Berücksichtigung von vorgegebenen Toleranzen erfüllt, und wobei die Bewegungseinrichtung (53) und/ oder die Materialabtragseinrichtung (56) derart gesteuert werden, dass die Materialabtragseinrichtung (56) dieses Material abträgt.

2. Verfahren nach Anspruch 1, **dadurch gekennzeichnet, dass** das Schneidwerkzeug (1, 21) ein Rotationsschneidwerkzeug ist, welches bei seiner Benutzung um eine geometrische Schneidwerkzeug-Rotationsachse (6, 26) gedreht wird.

3. Verfahren nach Anspruch 2, **dadurch gekennzeichnet, dass** die Ausrichtung der Schneidkantenbegrenzungsoberflächen (11a, 12a, 31a, 32a) relativ zu der geometrischen Schneidwerkzeug-Rotationsachse (6, 26) bestimmt wird.

4. Verfahren nach Anspruch 2 oder 3, **dadurch gekennzeichnet, dass** die Position der Schneidkantenbegrenzungsoberflächen (11a, 12a, 31a, 32a) relativ zu der geometrischen Schneidwerkzeug-Rotationsachse (6, 26) bestimmt wird.

5. Verfahren nach einem der vorhergehenden Ansprüche, **dadurch gekennzeichnet, dass** an mindestens einer Schneidkantenbegrenzungsoberfläche (11a,12a, 31a, 32a) mehrere Messpunkte (16) festgelegt werden, und dass bei dem in der Fixiereinrichtung (51) angeordneten Schneidwerkzeug (1) an diesen Messpunkten (16) die der Schneidkantenbegrenzungsoberfläche (11a, 21a, 31a, 32a) entsprechende Oberfläche mittels eines Messtasters (60) abgetastet wird.

6. Verfahren nach Anspruch 5, **dadurch gekennzeichnet, dass** die Schneidkantenbegrenzungsoberfläche (11a, 12a, 31a, 32a) unter Berücksichtigung der beim Abtasten ermittelten Abtastdaten angepasst wird, derart dass die Abtastdaten auf der angepassten Schneidkantenbegrenzungsoberfläche (11a, 12a, 31a, 32a) liegen.

7. Verfahren nach Anspruch 5 oder 6, **dadurch gekennzeichnet, dass** anhand der beim Abtasten ermittelten Abtastdaten überprüft wird, ob die Schneidkantenbegrenzungsoberflächen (11a, 12a, 31a, 32a) gekrümmt oder eben sind.

8. Verfahren nach einem der vorhergehenden Ansprüche, **dadurch gekennzeichnet, dass** anhand der Schneidkantenbegrenzungsoberflächen (11a, 12a, 31a, 32a) eine Bearbeitungsbahn (15) der Materialabtragseinrichtung (56) bestimmt wird.

9. Verfahren nach Anspruch 8, **dadurch gekennzeichnet, dass** sich die Bearbeitungsbahn (15) der Materialabtragseinrichtung (56) in einem Bereich erstreckt, der über einen Rand mindestens einer Schneidkantenbegrenzungsoberfläche (11a, 12a, 31a, 32a) hinausgeht.

10. Verfahren nach einem der vorhergehenden Ansprüche, **dadurch gekennzeichnet, dass** anhand der Schneidkantenbegrenzungsoberflächen (11a, 12a, 31a, 32a) ein Startpunkt und ein Endpunkt des Materialabtrags an der Schneidkantenbegrenzungsoberfläche (11a, 12a, 31a, 32a) bestimmt wird.

11. Verfahren nach einem der vorhergehenden Ansprüche, **dadurch gekennzeichnet, dass** der Materialabtrag mittels eines Lasers (56) erfolgt.

12. Verfahren nach Anspruch 11, **dadurch gekennzeichnet, dass** ein Laserstrahl (52) des Lasers (56) mit einer optischen Laserstrahl-Ablenkreinrichtung (57) relativ zu dem Schneidwerkzeug (1, 21) bewegt wird und dass diese Bewegung der mit der Bewegungseinrichtung (53) erzeugten Bewegung des Schneidwerkzeugs (1, 21) überlagert ist.

13. Verfahren nach einem der Ansprüche 1 bis 10, **dadurch gekennzeichnet, dass** der Materialabtrag mit einer Schleifscheibe erfolgt.

14. Verfahren nach einem der Ansprüche 1 bis 10, **dadurch gekennzeichnet, dass** die Materialabtrag mittels Electrical Discharge Machining EDM erfolgt.

15. Verfahren nach einem der vorhergehenden Ansprüche, **dadurch gekennzeichnet, dass** der Schneideinsatz (3, 4, 5, 23) aus einem ultraharten Material besteht wie polykristalliner Diamant (PCD), kubisches Bornitrid (CBN), Diamant aus der Gasphasenabscheidung (CVD), einkristalliner Diamant oder Keramik.

16. Verfahren nach einem der vorhergehenden Ansprüche, **dadurch gekennzeichnet, dass** die 3-dimensionale Schneidwerkzeug-Oberfläche (17) aus vorgegebenen CAD-Daten des Schneidwerkzeugs (1, 21) bestimmt wird.

17. Verfahren nach einem der Ansprüche 1 bis 15, **dadurch gekennzeichnet, dass** die 3-dimensionale Schneidwerkzeug-Oberfläche (18) mittels eines Oberflächen-Scanners (59) erzeugt wird, der die Oberfläche des Schneidwerkzeugs abtastet.

18. Verfahren nach einem der vorhergehenden Ansprüche, **dadurch gekennzeichnet, dass** über die 3-dimensionale Schneidwerkzeug-Oberfläche (17, 18) ein Gitter aus Teilflächen (14) gelegt wird, dass zu jeder Teilfläche (14) die Ausrichtung relativ zu der geometrischen Schneidwerkzeug-Rotationsachse (6, 26) bestimmt wird, und dass hieraus die Schneidkantenbegrenzungsoberflächen (11a, 12a, 31a, 32a) bestimmt werden.

19. Verfahren nach Anspruch 18, **dadurch gekennzeichnet, dass** die Teilflächen (14) Dreiecke sind.

20. Verfahren nach Anspruch 18 oder 19, **dadurch gekennzeichnet, dass** die Ausrichtung je zweier benachbarter Teilflächen (14) miteinander verglichen werden, und dass hieraus die Schneidkantenbegrenzungsoberflächen (11a, 12a, 31a, 32a) bestimmt werden.

21. Bearbeitungsvorrichtung zur Bearbeitung eines Schneidwerkzeugs (1, 21), welches einen Schneidwerkzeugkörper (2, 22) und mindestens einen an dem Schneidwerkzeugkörper (2, 22) befestigten Schneideinsatz (3, 4, 5, 23) mit mindestens einer Schneidkante (10, 30) aufweist, wobei die Bearbeitungsvorrichtung (50)
eine das Schneidwerkzeug (1, 21) aufnehmende und fixierende Fixiereinrichtung (51),
eine an der Oberfläche des Schneidwerkzeugs (1, 21) Material abtragende Materialabtragseinrichtung (56) und
eine Bewegungseinrichtung (53) aufweist, wobei die Bewegungseinrichtung (53) das in der Fixiereinrichtung (51) aufgenommene Schneidwerkzeug (1, 21) und die Materialabtragseinrichtung (56) zum gezielten Materialabtrag relativ zueinander bewegt,
**dadurch gekennzeichnet, dass** die Bearbeitungsvorrichtung (50) eine Steuerungseinrichtung (58) umfasst, die ausgebildet ist, die Fixierungseinrichtung (51), die Bewegungseinrichtung (53) und die Materialabtragseinrichtung (56) derart zu steuern, dass sie an dem Schneidwerkzeug (1, 21) das Verfahren nach einem der vorhergehenden Ansprüche durchführen.

22. Bearbeitungsvorrichtung nach Anspruch 21, **dadurch gekennzeichnet, dass** die Materialabtragseinrichtung mit einem Laser (56) ausgestattet ist, welcher durch Laserbearbeitung der Schneidkantenbegrenzungsoberflächen (11a, 12a, 31a, 32a) Material an den Schneidkantenbegrenzungsoberflächen (11a, 12a, 31a, 32a) abträgt.

23. Bearbeitungsvorrichtung nach Anspruch 21, **dadurch gekennzeichnet, dass** die Materialabtragseinrichtung mit mindestens einer Schleifscheibe ausgestattet ist, welche an den Schneidkantenbegrenzungsoberflächen Material durch Spanabhebung mittels Schleifen abträgt.

24. Bearbeitungsvorrichtung nach Anspruch 21, **dadurch gekennzeichnet, dass** die Materialabtragseinrichtung ausgebildet ist, mittels Electrical Discharge Machining EDM Material an den Schneidkantenbegrenzungsoberflächen abzutragen.

25. Bearbeitungsvorrichtung nach einem der Ansprüche 21 bis 24, **dadurch gekennzeichnet, dass** sie mit einem Oberflächen-Scanner (59) ausgestattet ist, der die Oberfläche des Schneidwerkzeugs (1, 21) zumindest in denjenigen Abschnitten des Schneidwerkzeugs (1, 21) erfasst, in denen der Schneideinsatz (3, 4, 5, 23) am Schneidwerkzeugkörper (2, 22) angeordnet ist.

26. Bearbeitungsvorrichtung nach einem der Ansprüche 21 bis 25, **dadurch gekennzeichnet, dass** sie mit einem Messtaster (60) ausgestattet ist, der an bestimmten Messpunkten (16) der Oberfläche des Schneideinsatzes (3, 4, 5, 23) die Oberfläche abtastet.

## Claims

1. Method for machining a cutting tool (1, 21) which comprises a cutting tool body (2, 22) and at least one cutting insert (3, 4, 5, 23) with at least one cutting edge (10, 30) attached to the cutting tool body (2, 22), whereby the machining is carried out by a machining device (50) which comprises a fixing device (51) which receives and fixes the cutting tool (1, 21),
a material removal device (56) which removes material on the surface of the cutting tool (1, 21), and
a movement device (53), wherein the movement device (53) moves the cutting tool (1, 21) received in the fixing device (51) and the material removal device (56) relative to each other for targeted material removal, **characterised by** the following method steps:
- fixing the cutting tool (1, 21) in the fixing device (51),
- specifying a three-dimensional surface of the cutting tool (1, 21) arranged in the fixing device (51) at least in those portions of the cutting tool (1, 21) in which the cutting insert (3, 4, 5, 23) is arranged on the cutting tool body (2, 22), whereby this surface is defined as a three-dimensional cutting tool surface (17, 18),
- determining those subregions of the three-dimensional cutting tool surface (17, 18) that form a surface of the cutting insert (3, 4, 5, 23) and are arranged adjacent to a cutting edge (10, 30) of the cutting insert (3, 4, 5, 23), whereby these subregions are defined as cutting edge boundary surfaces (11a, 12a, 31a, 32a),
- controlling the movement device (53) and/or the material removal device (56) on the basis of the cutting edge boundary surfaces (11a, 12a, 31a, 32a), wherein it is determined from the cutting edge boundary surfaces (11a, 12a, 31a, 32a) where and how much material must be removed on the cutting insert (3, 4, 5, 23) so that the cutting insert (3, 4, 5, 23) fulfills predetermined parameters in the region of its cutting edge (10, 30) taking into account predetermined tolerances, and wherein the movement device (53) and/or the material removal device (56) are controlled in such a way that the material removal device (56) removes this material.

2. Method according to claim 1, **characterised in that** the cutting tool (1, 21) is a rotary cutting tool which is rotated about a geometric cutting tool axis of rotation (6, 26) during its use.

3. Method according to claim 2, **characterised in that** the alignment of the cutting edge boundary surfaces (11a, 12a, 31a, 32a) relative to the geometric cutting tool axis of rotation (6, 26) is determined.

4. Method according to claim 2 or 3, **characterised in that** the position of the cutting edge boundary surfaces (11a, 12a, 31a, 32a) relative to the geometric cutting tool axis of rotation (6, 26) is determined.

5. Method according to one of the preceding claims, **characterised in that** a plurality of measuring points (16) are defined on at least one cutting edge boundary surface (11a, 12a, 31a, 32a), and **in that**, with the cutting tool (1) arranged in the fixing device (51), the surface corresponding to the cutting edge boundary surface (11a, 21a, 31a, 32a) is probed at these measuring points (16) by means of a measuring probe (60).

6. Method according to claim 5, **characterised in that** the cutting edge boundary surface (11a, 12a, 31a, 32a) is adapted taking into account the probing data determined during probing, in such a way that the probing data lie on the adapted cutting edge boundary surface (11a, 12a, 31a, 32a).

7. Method according to claim 5 or 6, **characterised in that** the probing data determined during probing is used to check whether the cutting edge boundary surfaces (11a, 12a, 31a, 32a) are curved or flat.

8. Method according to one of the preceding claims, **characterised in that** a machining path (15) of the material removal device (56) is determined on the basis of the cutting edge boundary surfaces (11a, 12a, 31a, 32a).

9. Method according to claim 8, **characterised in that** the machining path (15) of the material removal device (56) extends in a region that extends beyond an edge of at least one cutting edge boundary surface (11a, 12a, 31a, 32a).

10. Method according to one of the preceding claims, **characterised in that** a starting point and an end point of the material removal at the cutting edge boundary surface (11a, 12a, 31a, 32a) are determined on the basis of the cutting edge boundary surfaces (11a, 12a, 31a, 32a).

11. Method according to one of the preceding claims, **characterised in that** the material removal is carried out by means of a laser (56).

12. Method according to claim 11, **characterised in that** a laser beam (52) of the laser (56) is moved relative to the cutting tool (1, 21) by an optical laser beam deflection device (57) and **in that** this movement is superimposed on the movement of the cutting tool (1, 21) generated by the movement device (53).

13. Method according to one of claims 1 to 10, **characterised in that** the material removal is carried out with a grinding wheel.

14. Method according to one of claims 1 to 10, **characterised in that** the material removal is carried out by means of Electrical Discharge Machining EDM.

15. Method according to one of the preceding claims, **characterised in that** the cutting insert (3, 4, 5, 23) consists of an ultra-hard material such as polycrystalline diamond (PCD), cubic boron nitride (CBN), diamond from chemical vapour deposition (CVD), monocrystalline diamond or ceramic.

16. Method according to one of the preceding claims, **characterised in that** the three-dimensional cutting tool surface (17) is determined from predetermined CAD data of the cutting tool (1, 21).

17. Method according to one of claims 1 to 15, **characterised in that** the three-dimensional cutting tool surface (18) is generated by means of a surface scanner (59) which scans the surface of the cutting tool.

18. Method according to one of the preceding claims, **characterised in that** a grid of partial surfaces (14) is laid over the three-dimensional cutting tool surface (17, 18), that the alignment relative to the geometric cutting tool axis of rotation (6, 26) is determined for each partial surface (14), and **in that** the cutting edge boundary surfaces (11a, 12a, 31a, 32a) are determined therefrom.

19. Method according to claim 18, **characterised in that** the partial surfaces (14) are triangles.

20. Method according to claim 18 or 19, **characterised in that** the alignment of each two adjacent partial surfaces (14) is compared with each other, and that the cutting edge boundary surfaces (11a, 12a, 31a, 32a) are determined therefrom.

21. Machining device for machining a cutting tool (1, 21) which comprises a cutting tool body (2, 22) and at least one cutting insert (3, 4, 5, 23) with at least one cutting edge (10, 30) attached to the cutting tool body (2, 22), wherein the machining device (50) comprises
a fixing device (51) which receives and fixes the cutting tool (1, 21),
a material removal device (56) which removes material on the surface of the cutting tool (1, 21), and
a movement device (53), which moves the cutting tool (1, 21) received in the fixing device (51) and the material removal device (56) relative to each other for targeted material removal,
**characterised in that** the machining device (50) comprises a control device (58) which is configured to control the fixing device (51), the movement device (53) and the material removal device (56) in such a way that they carry out the method according to one of the preceding claims on the cutting tool (1, 21).

22. Machining device according to claim 21, **characterised in that** the material removal device is equipped with a laser (56) which removes material on the cutting edge boundary surfaces (11a, 12a, 31a, 32a) by laser machining of the cutting edge boundary surfaces (11a, 12a, 31a, 32a).

23. Machining device according to claim 21, **characterised in that** the material removal device is equipped with at least one grinding wheel which removes material on the cutting edge boundary surfaces by chip removal by grinding.

24. Machining device according to claim 21, **characterised in that** the material removal device is configured to remove material on the cutting edge boundary surfaces by means of Electrical Discharge Machining EDM.

25. Machining device according to one of claims 21 to 24, **characterised in that** it is equipped with a surface scanner (59) which detects the surface of the cutting tool (1, 21) at least in those portions of the cutting tool (1, 21) in which the cutting insert (3, 4, 5, 23) is arranged on the cutting tool body (2, 22).

26. Machining device according to one of claims 21 to 25, **characterised in that** it is equipped with a measuring probe (60) which probes the surface at specific measuring points (16) of the surface of the cutting insert (3, 4, 5, 23).

## Revendications

1. Procédé pour l'usinage d'un outil de coupe (1, 21) qui présente un corps d'outil de coupe (2, 22) et au moins un insert de coupe (3, 4, 5, 23) fixé au corps d'outil de coupe (2, 22) et comportant au moins une arête de coupe (10, 30), dans lequel l'usinage est effectué à l'aide d'un dispositif d'usinage (50) qui présente un appareil de fixation (51) recevant et fixant l'outil de coupe (1, 21), un appareil d'enlèvement de matière (56) enlevant de la matière au niveau de la surface de l'outil de coupe (1, 21), et un appareil de déplacement (53), dans lequel l'appareil de déplacement (53) déplace l'outil de coupe (1, 21) reçu dans l'appareil de fixation (51) et l'appareil d'enlèvement de matière (56) l'un par rapport à l'autre en vue d'un enlèvement ciblé de matière,
**caractérisé par** les étapes de procédé suivantes:
- fixation de l'outil de coupe (1, 21) dans l'appareil de fixation (51),
- prédéfinition d'une surface tridimensionnelle de l'outil de coupe (1, 21) disposé dans l'appareil de fixation (51), au moins dans les sections de l'outil de coupe (1, 21) où l'insert de coupe (3, 4, 5, 23) est disposé sur le corps d'outil de coupe (2, 22), dans lequel ladite surface est définie comme surface tridimensionnelle d'outil de coupe (17, 18),
- détermination de zones partielles de la surface tridimensionnelle d'outil de coupe (17, 18) qui forment une surface de l'insert de coupe (3, 4, 5, 23) et qui sont disposées de manière à être adjacentes à une arête de coupe (10, 30) de l'insert de coupe (3, 4, 5, 23), dans lequel lesdites zones partielles sont définies comme surfaces de délimitation d'arête de coupe (11a, 12a, 31a, 32a),
- commande de l'appareil de déplacement (53) et/ou de l'appareil d'enlèvement de matière (56) en fonction des surfaces de délimitation d'arête de coupe (11a, 12a, 31a, 32a) dans lequel, à partir des surfaces de délimitation d'arête de coupe (11a, 12a, 31a, 32a), on détermine où et en quelle quantité la matière doit être enlevée sur l'insert de coupe (3, 4, 5, 23) afin que l'insert de coupe (3, 4, 5, 23) respecte, dans la zone de son arête de coupe (10, 30), des paramètres prédéfinis en tenant compte de tolérances prédéfinies, et dans lequel l'appareil de déplacement (53) et/ou l'appareil d'enlèvement de matière (56) sont commandés de telle sorte que l'appareil d'enlèvement de matière (56) enlève ladite matière.

2. Procédé selon la revendication 1, **caractérisé en ce que** l'outil de coupe (1, 21) est un outil de coupe rotatif qui, lors de son utilisation, est mis en rotation autour d'un axe géométrique de rotation d'outil de coupe (6, 26).

3. Procédé selon la revendication 2, **caractérisé en ce que** l'orientation des surfaces de délimitation d'arête de coupe (11a, 12a, 31a, 32a) est déterminée par rapport à l'axe géométrique de rotation d'outil de coupe (6, 26).

4. Procédé selon la revendication 2 ou 3, **caractérisé en ce que** la position des surfaces de délimitation d'arête de coupe (11a, 12a, 31a, 32a) est déterminée par rapport à l'axe géométrique de rotation d'outil de coupe (6, 26).

5. Procédé selon l'une des revendications précédentes,
**caractérisé en ce que** plusieurs points de mesure (16) sont spécifiés sur au moins une surface de délimitation d'arête de coupe (11a, 12a, 31a, 32a) et **en ce que**, sur l'outil de coupe (1) disposé dans l'appareil de fixation (51), la surface correspondant à la surface de délimitation d'arête de coupe (11a, 21a, 31a, 32a) est balayée au niveau desdits points de mesure (16) à l'aide d'un capteur de mesure (60).

6. Procédé selon la revendication 5, **caractérisé en ce que** la surface de délimitation d'arête de coupe (11a, 12a, 31a, 32a) est adaptée en tenant compte des données de balayage déterminées lors du balayage, de telle sorte que les données de balayage se situent sur la surface de délimitation d'arête de coupe (11a, 12a, 31a, 32a) adaptée.

7. Procédé selon la revendication 5 ou 6, **caractérisé en ce que** l'on vérifie, à l'aide des données de balayage déterminées lors du balayage, si les surfaces de délimitation d'arête de coupe (11a, 12a, 31a, 32a) sont courbes ou planes.

8. Procédé selon l'une des revendications précédentes,
**caractérisé en ce qu'**une trajectoire d'usinage (15) de l'appareil d'enlèvement de matière (56) est déterminée à partir des surfaces de délimitation d'arête de coupe (11a, 12a, 31a, 32a).

9. Procédé selon la revendication 8, **caractérisé en ce que** la trajectoire d'usinage (15) de l'appareil d'enlèvement de matière (56) s'étend dans une zone qui dépasse d'un bord d'au moins une surface de délimitation d'arête de coupe (11a, 12a, 31a, 32a).

10. Procédé selon l'une des revendications précédentes,
**caractérisé en ce que**, à l'aide des surfaces de délimitation d'arête de coupe (11a, 12a, 31a, 32a), un point de départ et un point d'arrivée de l'enlèvement de matière sur la surface de délimitation d'arête de coupe (11a, 12a, 31a, 32a) sont déterminés.

11. Procédé selon l'une des revendications précédentes,
**caractérisé en ce que** l'enlèvement de matière est effectué par le biais d'un laser (56).

12. Procédé selon la revendication 11, **caractérisé en ce qu'**un faisceau laser (52) du laser (56) est déplacé par rapport à l'outil de coupe (1, 21) par un appareil optique de déviation de faisceau laser (57) et **en ce que** ledit mouvement se superpose au mouvement de l'outil de coupe (1, 21) généré par l'appareil de déplacement (53).

13. Procédé selon l'une des revendications 1 à 10, **caractérisé en ce que** l'enlèvement de matière est effectué au moyen d'une meule.

14. Procédé selon l'une des revendications 1 à 10, **caractérisé en ce que** l'enlèvement de matière est effectué par usinage par électroérosion EDM.

15. Procédé selon l'une des revendications précédentes,
**caractérisé en ce que** l'insert de coupe (3, 4, 5, 23) est constitué d'un matériau ultra-dur tel que le diamant polycristallin (PCD), le nitrure de bore cubique (CBN), le diamant obtenu par dépôt chimique en phase vapeur (CVD), le diamant monocristallin ou la céramique.

16. Procédé selon l'une des revendications précédentes,
**caractérisé en ce que** la surface tridimensionnelle d'outil de coupe (17) est déterminée à partir de données CAO prédéfinies de l'outil de coupe (1, 21).

17. Procédé selon l'une des revendications 1 à 15, **caractérisé en ce que** la surface tridimensionnelle d'outil de coupe (18) est générée à l'aide d'un scanner de surface (59) qui balaye la surface de l'outil de coupe.

18. Procédé selon l'une des revendications précédentes,
**caractérisé en ce qu'**une grille constituée de surfaces partielles (14) est établie sur la surface tridimensionnelle d'outil de coupe (17, 18), **en ce que** l'orientation de chaque surface partielle (14) par rapport à l'axe géométrique de rotation d'outil de coupe (6, 26) est déterminée, et **en ce qu'**à partir de ceci, les surfaces de délimitation d'arête de coupe (11a, 12a, 31a, 32a) sont déterminées.

19. Procédé selon la revendication 18, **caractérisé en ce que** les surfaces partielles (14) sont des triangles.

20. Procédé selon la revendication 18 ou 19, **caractérisé en ce que** les orientations de respectivement deux surfaces partielles (14) adjacentes sont comparées entre elles, et **en ce qu'**à partir de ceci, les surfaces de délimitation d'arête de coupe (11a, 12a, 31a, 32a) sont déterminées.

21. Dispositif d'usinage pour l'usinage d'un outil de coupe (1, 21) qui présente un corps d'outil de coupe (2, 22) et au moins un insert de coupe (3, 4, 5, 23) fixé au corps d'outil de coupe (2, 22) et comportant au moins une arête de coupe (10, 30), dans lequel le dispositif d'usinage (50) présente
un appareil de fixation (51) recevant et fixant l'outil de coupe (1, 21), un appareil d'enlèvement de matière (56) enlevant de la matière sur la surface de l'outil de coupe (1, 21) et
un appareil de déplacement (53), dans lequel l'appareil de déplacement (53) déplace l'outil de coupe (1, 21) reçu dans l'appareil de fixation (51) et l'appareil d'enlèvement de matière (56) l'un par rapport à l'autre en vue d'un enlèvement ciblé de matière,
**caractérisé en ce que** le dispositif d'usinage (50) comprend un appareil de commande (58) qui est configuré pour commander l'appareil de fixation (51), l'appareil de déplacement (53) et l'appareil d'enlèvement de matière (56) de telle sorte qu'ils réalisent le procédé selon l'une des revendications précédentes sur l'outil de coupe (1, 21).

22. Dispositif d'usinage selon la revendication 21, **caractérisé en ce que** l'appareil d'enlèvement de matière est équipé d'un laser (56) qui, par usinage au laser des surfaces de délimitation d'arête de coupe (11a, 12a, 31a, 32a), enlève de la matière au niveau des surfaces de délimitation d'arête de coupe (11a, 12a, 31a, 32a).

23. Dispositif d'usinage selon la revendication 21, **caractérisé en ce que** l'appareil d'enlèvement de matière est équipé d'au moins une meule qui enlève de la matière au niveau des surfaces de délimitation d'arête de coupe par enlèvement de copeaux au moyen d'un meulage.

24. Dispositif d'usinage selon la revendication 21, **caractérisé en ce que** l'appareil d'enlèvement de matière est conçu pour enlever de la matière au niveau des surfaces de délimitation d'arête de coupe au moyen d'un usinage par électroérosion (EDM).

25. Dispositif d'usinage selon l'une des revendications 21 à 24,
**caractérisé en ce qu'**il est équipé d'un scanner de surface (59) qui détecte la surface de l'outil de coupe (1, 21) au moins dans les sections de l'outil de coupe (1, 21) où l'insert de coupe (3, 4, 5, 23) est disposé sur le corps d'outil de coupe (2, 22).

26. Dispositif d'usinage selon l'une des revendications 21 à 25,
**caractérisé en ce qu'**il est équipé d'un capteur de mesure (60) qui balaye la surface de l'insert de coupe (3, 4, 5, 23) au niveau de points de mesure (16) déterminés.
